# EUROPÄISCHE PATENTSCHRIFT

(11) **EP 3 452 966 B1**
(45) Veröffentlichungstag und Bekanntmachung des Hinweises auf die Patenterteilung: **21.07.2021**
(21) Anmeldenummer: 17722720.4
(22) Anmeldetag: 04.05.2017
(51) Int. Cl.: G06Q 10/08

(54) **LAGERLOGISTIK-VERFAHREN**
STORAGE LOGISTICS METHOD
PROCÉDÉ DE LOGISTIQUE DE STOCKAGE

(30) Priorität: 04.05.2016 DE 102016207713
(43) Veröffentlichungstag der Anmeldung: 13.03.2019
(73) Patentinhaber: Würth International AG, 7000 Chur (CH); Adolf Würth GmbH & Co. KG, 74653 Künzelsau (DE)
(72) Erfinder: WITTIG, Klaus, 74676 Öhringen-Cappel (DE)
(74) Vertreter: Dilg, Haeusler, Schindelmann Patentanwaltsgesellschaft mbH
(86) Internationale Anmeldenummer: PCT/EP2017/060607
(87) Internationale Veröffentlichungsnummer: WO 2017/191230

(56) Entgegenhaltungen:
- EP-A1- 2 178 035
- DE-A1- 19 714 799
- US-A1- 2007 069 867
- US-A1- 2012 229 279

## Beschreibung

Die Erfindung betrifft ein Lagersystem mit zumindest einem Regal, wobei das Regal mehrere übereinander angeordnete Regalböden aufweist, wobei jeder Regalboden in mehrere nebeneinander angeordnete Kompartimente logisch unterteilt ist. Die Erfindung betrifft des Weiteren ein Verfahren zur Einrichtung eines solchen Lagersystems und ein Verfahren zum Betrieb eines solchen Lagersystems.

Um den Anforderungen einer zeitgemäßen und damit anspruchsvollen Logistik gerecht zu werden, ist es heutzutage notwendig die dafür verwendeten Lagervorrichtungen intelligent zu machen und in übergeordnete Gesamtsysteme einzubinden.

Generell sind bereits einige Ansätze für automatisierte Lagersysteme mit automatischen Erfassungsvorrichtungen bekannt.

Die DE10 2007 017 207 A1 beschreibt einen Sensor für eine Belegerkennung und offenbart dabei eine Schublade mit einem Schaumstoffnormteil und Ausnehmungen zur Aufnahme von Werkzeugen. Am Grund einer Ausnehmung befindet sich ein als Reflexlichtschranke ausgebildeter Sensor und umfasst dabei einen Lichtsender sowie einen in unmittelbarer Nähe angeordneten Empfänger. Je nachdem, ob sich ein Werkzeug in der Ausnehmung befindet oder nicht, wird das emittierte Licht reflektiert oder nicht, so dass der Empfänger nur dann ein Signal erzeugt, wenn ein Werkzeug in der Ausnehmung vorhanden ist.

Die DE 197 14 799 C2 zeigt eine Vorrichtung zum Lagern von Wareneinheiten mit einer am Boden einer Warenablage angeordneten Matrix aus Sensoren und entsprechenden Signalleitungen, wobei die Signalleitungen im Bereich der Warenablage von einem Leiterplattenstreifen gebildet werden, auf dem auch die Sensoren montiert sind, wobei die Sensoren Drucksensoren, kapazitive/induktive Sensoren oder mechanische Schalter sind.

Die EP 1 217 345 A1 zeigt ein System zur Kontrolle des Warenflusses verschiedener Artikel von mehreren Lieferanten zu einem Verwendungsort, wobei am Verwendungspunkt ein Lager vorgesehen ist, dass automatisch die Notwendigkeit erfasst, das Regal nachzufüllen.

Die DE 698 27 454 T2 zeigt ein Verfahren zum Führen eines Lagers mit mehreren Behältern, wobei Nachfüllungen der Behälter automatisch veranlasst werden.

Die DE 20 2014 004 232 U1 zeigt ein Warenregal zur Selbstbedienungsentnahme von Backwaren. Das Warenregal weist ein Vorratsfach und zumindest eine Lichtschranke auf. Dies erlaubt es, den Füllzustand des Vorratsfachs im Bereich der Lichtschranke zu erfassen.

Die EP 2 178 035 A1 offenbart ein Verfahren und eine Anordnung zur Leerraummessung für Lager- oder Transporträume. Dabei wird ein Lager- oder Transportraum in mehrere Teilflächen unterteilt. In den Teilflächen wird eine Abstandsmessung durchgeführt. Die Ergebnisse der Messung werden an eine zentrale Instanz übermittelt. Die zentrale Instanz kann die Ergebnisse der Messung verarbeiten, sodass Informationen über die Belegung des Lager- oder Transportraums ermittelt werden können.

Die WO 2005/088494 A1 betrifft ein Lagersystem mit mindestens einer Aufnahme für lagernde Güter. Das Lagersystem weist ein gravimetrisches Sensorelement zur Erfassung der Güter auf. Das Lagersystem kann zusätzliche Sensortypen zur Erfassung der Güter aufweisen.

Die DE 10 2004 035 819 A1 offenbart ein Verfahren zur automatischen Lagerguterfassung in einem Warenlager. Hierbei ist jeder einzelne in dem Warenlager abgelegte Artikel mit einem Transponder versehen. Objektbezogene Daten werden von dem Transponder an ein Lesegerät übertragen und von einem Lagerverwaltungsrechner erfasst.

Darüber hinaus sind weitere Lösungen bekannt, welche mit Kräftesensoren, wie z.B. Wägzellen oder Dehnmesstreifen, das Gewicht ermitteln und so eine Belegung detektieren. Es sind optische Systeme bekannt, bei denen Kameras Bilder aufnehmen und die Bilderdaten hinsichtlich einer Belegerkennung ausgewertet werden.

US 2012/0229279 A1 offenbart ein Lagersystem mit zumindest einem Regal, wobei das Regal mehrere übereinander angeordnete Regalböden aufweist, wobei jeder Regalboden in mehrere nebeneinander angeordnete Kompartimente logisch unterteilbar ist, wobei die Kompartimente jeweils einen Teilbereich innerhalb eines Überwachungsraums bilden; wobei jedem der Kompartimente eine eindeutige Adresse zugeordnet ist, und mit einem Sensorsystem zur Belegerkennung der Kompartimente, wobei das Sensorsystem zur räumlichen Abtastung der Belegung eines der Kompartimente ausgebildet ist, um eine Belegungsinformation zu erzeugen, die angibt, ob die Kompartimente gefüllt oder leer sind, und mit einem Datenbus, der mit dem Sensorsystem und einer Kommunikationseinrichtung verbunden ist, wobei das Lagersystem zur Durchführung der folgenden Schritte ausgebildet ist: Erfassung jeweils einer Belegungsinformation der Kompartimente durch das Sensorsystem, Übertragung der Belegungsinformation mit der dem Kompartiment, von dem die Belegungsinformation erfasst wurde, zugeordneten Adresse von dem Sensorsystem über den Datenbus an die Kommunikationseinrichtung, Aufbau einer Netzwerkverbindung durch die Kommunikationseinrichtung, um in uni- oder bidirektionaler Kommunikation Belegungsinformationen an einen Server oder Steuerungsinformationen an das Lagersystem zu übertragen. Das Sensorsystem kann mehrere Sensorbaugruppen aufweisen. Der Überwachungsraum ist durch Begrenzungselemente eingefasst oder umfasst.

US 2007/069867 A1 offenbart ein Lagersystem mit mindestens einer Ablage für zu lagernde Waren, einem Kommunikationsnetz und einer Recheneinheit zum Ableiten von Inventardaten. Das Lagersystem verfügt über ein gravimetrisches Sensorelement, das zur Erfassung der Ware in Form eines Sensorarrays oder einer Sensormatrix vorliegt. Durch die Erfassung einer Vielzahl von Messwerten der Waren kann das gesamte Lagersystem in Form eines Sensornetzwerks vorliegen und ist hinsichtlich des Modells für die Ableitung von Bestandsdaten konfiguriert, wodurch sowohl eine Identifizierung des Typs der gelagerten Waren ermöglicht wird sowie die Bestimmung der Menge davon.

Aufgabe der Erfindung ist es, ein verbessertes Lagersystem sowie Verfahren zur Einrichtung und zum Betrieb eines solchen Lagersystems bereitzustellen, die eine verbesserte Einrichtung des Lagersystems ermöglichen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Ausführungsformen der Erfindung sind besonders vorteilhaft, da eine automatische Erfassung der Bestände in den einzelnen Kompartimenten des Lagersystems erfolgen kann. Zeigt die Beleginformationen einen zu geringen Bestand in einem Kompartiment an, kann die Kommunikationseinrichtung oder der Server eine Nachbestellung der jeweiligen Artikel veranlassen. Diese können nachfolgend in die jeweiligen Kompartimente einsortiert werden, wobei durch die Sensorbaugruppen eine Erfassung der neuen Bestände erfolgen kann. Somit ist eine vereinfachte Lagerhaltung möglich. Des Weiteren können die Belegungsinformationen beispielsweise über die Kommunikationseinrichtung oder den Server abgerufen werden, so dass auch eine Fernabfrage erfolgen kann, ob ausreichende Bestände einzelner Artikel in den Kompartimenten vorhanden sind.

Nach Ausführungsformen der Erfindung ist Lagersystem mit zumindest einem Regal vorgesehen, wobei das Regal mehrere übereinander angeordnete Regalböden aufweist. Jeder Regalboden ist in mehrere nebeneinander angeordnete Kompartimente logisch unterteilt ist, wobei die Kompartimente jeweils einen Teilbereich innerhalb eines Überwachungsraums bilden und jedem der Kompartimente eine eindeutige Adresse zugeordnet ist. Des Weiteren weist das Lagersystem ein Sensorsystem zur Belegerkennung der Kompartimente auf, wobei das Sensorsystem zur räumlichen Abtastung der Belegung eines der Kompartimente ausgebildet ist, um eine Belegungsinformation zu erzeugen, die einen Belegungsgrad des betreffenden Kompartiments, sowie einen Datenbus, der mit dem Sensorsystem und einer Kommunikationseinrichtung verbunden ist. Das Sensorsystem weist mehrere Sensorbaugruppen auf. Der Überwachungsraum ist durch Begrenzungselemente eingefasst oder umfasst, die Vorrichtungen zur Aufnahme von weiteren Begrenzungselementen oder von Trennelementen zur Einrichtung der Teilbereiche aufweisen, wobei die weiteren Begrenzungselemente oder die Trennelemente dazu konfiguriert sind, von oben in die Vorrichtungen eingeschoben zu werden, so dass annähernd rechtwinklige Ecken sowie der jeweilige Teilbereich entstehen. Die Vorrichtungen weisen seitlich Kontaktflächen auf, die dazu konfiguriert sind, die dort eingeschobenen Begrenzungselemente und die darin enthaltenen Sensorbaugruppen elektrisch mit dem Sensorsystem zu verbinden. Das Lagersystem ist zur Durchführung der folgenden Schritte ausgebildet:
- Erfassung jeweils einer Belegungsinformation der Kompartimente durch das Sensorsystem,
- Übertragung der Belegungsinformation mit der dem Kompartiment, von dem die Belegungsinformation erfasst wurde, zugeordneten Adresse von dem Sensorsystem über den Datenbus an die Kommunikationseinrichtung,
- Aufbau einer Netzwerkverbindung durch die Kommunikationseinrichtung, um in uni- oder bidirektionaler Kommunikation Belegungsinformationen an einen Server oder Steuerungsinformationen an das Lagersystem zu übertragen.

Bei dem Regal kann es sich um ein Schrägbodenregal handeln, und die Regalböden können ein Gefälle in Richtung auf eine Entnahmeseite des Schrägbodenregals aufweisen. Bei einem Schrägbodenregal weisen die Regalböden eine Neigung in eine Befüllungs- bzw. Entnahmerichtung auf, so dass die in den Kompartimenten gelagerten Artikel nach der Entnahme eines Artikels automatisch in Entnahmerichtung nachrutschen. Die Artikel liegen somit lückenlos aneinander. Die Verwendung eines Sensorsystems bei solchen Schrägbodenregalen ist besonders vorteilhaft, da eine Erfassung des Bestandes mit wenigen Sensoren möglich ist, da keine gegebenenfalls vorhandenen Freiräume zwischen den Artikel erfasst werden müssen. Es ist lediglich erforderlich, die Position des letzten Artikels zu erfassen. Ist die Länge der einzelnen Artikel bzw. die Anzahl Artikel pro Längeneinheit bekannt, kann so die Anzahl der Artikel im jeweiligen Kompartiment ermittelt werden. Beispielsweise kann die Länge der einzelnen Artikel bereits bekannt sein oder diese wird während der Einrichtung des Regalsystems ermittelt und gespeichert. Ist die Position des letzten Artikels bei Befüllung mit der Mindestmenge bekannt, ist es beispielsweise auch ausreichend nur das dieser Position zugeordnete Sensorelement abzufragen, um zu prüfen, ob eine Mindestmenge des jeweiligen Artikels vorhanden ist. Beispielsweise kann bei der Einrichtung des Regalsystem dieses mit der Mindestmenge befüllt werden und die Position des letzten Sensors detektiert werden, der eine Belegung anzeigt, bzw. die Position des ersten Sensorelements, das keine Belegung anzeigt.

Jede der Sensorbaugruppen ist einem der Kompartimente zugeordnet, wobei eine Sensorbaugruppe ihrerseits eine Anzahl von in Längsrichtung der Sensorbaugruppe angeordneten Sensorelementen aufweist. Die Zuordnung der Sensorbaugruppen zu den Kompartimenten kann die Steuerung bzw. die Einrichtung des Lagersystems vereinfachen. Die in Längsrichtung angeordneten Sensorelemente können in Längsrichtung eines Kompartiments, bei einem Schrägbodenregal beispielsweise in Entnahmerichtung angeordnet sein, so dass eine einfache Erfassung des Bestandes in einem Kompartiment erfolgen kann.

Insbesondere kann jede Sensorbaugruppe genau einem Kompartiment eindeutig zugeordnet sein und die Längsrichtung der Sensorbaugruppe verläuft in Richtung des Gefälles der Kompartimente.

Eine Sensorbaugruppe kann eine streifenförmige flexible oder starre Leiterplatte als Träger aufweisen. Die Leiterplatte kann an die Form bzw. die Geometrie des jeweiligen Kompartiments angepasst werden.

Das Lagersystem kann des Weiteren eine Steuerelektronik für jede der Sensorbaugruppen aufweisen, wobei die Steuerelektronik zur Verbindung der Sensorbaugruppe mit dem Datenbus sowie zur Ausgabe der dem Kompartiment zugeordneten Adresse und der Belegungsinformation auf den Datenbus ausgebildet ist.

Jedem der Kompartimente ist beispielsweise zumindest ein optisches Signalisierungsmittel eindeutig zugeordnet ist, wobei das optische Signalisierungsmittel mit dem Datenbus verbunden ist, um über den Datenbus ein Signal zur optischen Indizierung eines Kompartiments zu empfangen und die optische Indizierung zu realisieren. Durch die Signalisierungsmittel kann beispielsweise ein aufzufüllendes Kompartiment indiziert werden.

Das Lagersystem kann zur Speicherung eines Inventurzeitpunkts konfiguriert sein und mit Erreichen des Inventurzeitpunkts wird eine automatische Inventur durchgeführt. Die Erfassung der Bestände aller Kompartimente kann, abhängig von der Größe des Lagersystems, eine bestimmte Zeit in Anspruch nehmen, wobei es gewünscht sein kann, dass während der Erfassung der Bestände keine Artikel entnommen oder einsortiert werden. Der Zeitpunkt für die Inventur kann so gewählt werden, dass während der Inventur keine Entnahme oder Einlagerung in das Lagersystem erfolgt, beispielsweise nachts.

In der Kommunikationseinrichtung ist beispielsweise ein Belegplan gespeichert, in dem eine Zuordnung von Gütertypen jeweils zu einer oder mehreren Adressen bzw. Kompartimenten und ein Schwellwert für die Belegungsmenge von Gütern jeweils eines Gütertyps gespeichert ist. Die Kommunikationseinrichtung kann so konfiguriert sein, dass aus den über den Datenbus empfangenen Beleginformationen und jeweils zugeordneten Adressen die in dem Lagersystem eingelagerte Menge von Gütern eines jeden Gütertyps ermittelt, die ermittelte Menge von Gütern eines jeden Gütertyps mit dem diesem Gütertyp zugeordneten Mengen-Schwellwert verglichen und ein Signal gesendet werden kann, wenn die ermittelte Gütermenge dieses Gütertyps den ihm zugeordneten Mengen-Schwellwert unterschreitet. Dadurch kann sichergestellt werden, dass stets eine ausreichende Menge der in den Kompartimenten gelagerten Artikel vorhanden ist.

Nach Ausführungsformen der Erfindung kann auf der Kommunikationseinrichtung ein Fernwartungsprogramm-Modul installiert sein, welches über das Netzwerk ansprechbar ist und direkt Wartungsvorgänge auf dem Lagersystem durchführen kann. Das Fernwartungsprogrammmodul ist beispielsweise so konfiguriert, dass aufgrund des Empfangs eines Kommandos über das Netzwerk das Sensorsystem so angesteuert wird, dass die Belegungsinformation von einem in dem Kommando durch die Angabe einer entsprechenden Adresse spezifizierten Kompartiment erfasst wird und aufgrund der Belegungsinformation ein Belegungsinformationssignal generiert wird, welches über das Netzwerk gesendet wird.

Die Kommunikationseinrichtung kann Belegungsinformationen des Lagersystems dynamisch speichern, so dass bei einem Systemausfall die Belegungsinformationen jederzeit wiederhergestellt und bei erneuter Systemverfügbarkeit wieder verwendet werden können.

Die Kommunikationseinrichtung ist beispielsweise zum Anschluss eines Computers über eine lokale Verbindung ausgebildet, um einen in der Kommunikationseinrichtung gespeicherten Belegplan auf einer Nutzerschnittstelle des Computers zu visualisieren.

Die Kommunikationseinrichtung kann einen Einrichtungsmodus haben, wobei eine mittels des Sensorsystems im Einrichtungsmodus erfasste Belegung des Lagersystems als Belegplan gespeichert werden kann, wobei der Belegplan insbesondere den einem jeden Kompartiment zugeordneten Gütertyp und einen diesem Gütertyp zugeordneten Belegungs-Schwellwert beinhaltet, der durch das Sensorsystem erfasste Belegung gegeben ist.

Das Lagersystem kann des Weiteren einen Handscanner zur optischen Erfassung eines optisch lesbaren Codes aufweisen, wobei jedes der Kompartimente einen die jeweiligen Adresse angebenden, optisch lesbaren Code trägt, wobei die Kommunikationseinrichtung so konfiguriert ist, dass die Zuordnung eines Gütertyps zu einem oder mehreren der Kompartimente dadurch erfolgt, dass die Kommunikationseinrichtung von dem Handscanner eine optisch erfasste Adresse und einen der optisch erfassten Adresse zugeordneten Gütertyp empfängt.

Beispielsweise ist der Handscanner kabellos ausgebildet und weist eine drahtlose Kommunikationsschnittstelle zur Kommunikation mit der Kommunikationseinrichtung auf.

Das Sensorsystem kann pro Kompartiment eine Sensorbaugruppe als flexible streifenförmige Leiterplatte aufweisen.

Die Signalgeber und die Signalempfänger einer Sensorbaugruppe können paarweise auf der Leiterplatte angeordnet sein, so dass ein von einem der Signalgeber abgegebenes Signal von einem Signalempfänger desselben Paars empfangen werden kann. Das vom Signalsender ausgesendete Signal kann dadurch einfacher vom Signalempfänger empfangen werden, so die Distanz zwischen Signalempfänger und Signalsender kürzer ist bzw. das Signal nicht den Aufnahmeraum des Kompartiments queren muss. Insbesondere kann das Signal schwächer ausgebildet sein, so dass die Gefahr einer Beeinflussung durch die Signale benachbarter Signalsender geringer ist. Ein weiterer Vorteil besteht darin, dass keine gegenseitige Ausrichtung des Signalempfängers und des Signalsenders im Kompartiment erfolgen muss. Die Ausrichtung erfolgt bereits durch die Anordnung auf der Leiterplatte. Dies hat den Vorteil, dass bei der Herstellung des Regals eine größere Herstellungstoleranz möglich ist, da keine Ausrichtung der Regalboden bzw. der Sensorbaugruppen an den Regalböden zueinander erforderlich ist.

Insbesondere können der Signalempfänger und der Signalsender benachbart auf der Leiterplatte angeordnet sein. Beispielsweise ist der Signalempfänger ringförmig um den Signalsender angeordnet, so dass dieser das vom Signalsender ausstrahlende Signal unabhängig von der Abstrahlrichtung empfangen kann.

Die Signalgeber, die Signalempfänger und/oder Leiterbahnen zur Verschaltung der Signalgeber und Signalempfänger sind beispielsweise mit dem Datenbus auf die Leiterplatte aufgedruckt.

Nach Ausführungsformen der Erfindung ist des Weiteren ein Verfahren zur Einrichtung des Lagersystems mit folgenden Schritten vorgesehen:
- Schaltung der Kommunikationseinrichtung in einen Einrichtungsmodus,
- Belegung der Kompartimente des Lagersystems nach einem vorgegebenen Belegplan mit Mindest-Bestandsmengen, unterhalb deren Nachbestellungen ausgelöst werden sollen,
- Erfassung der Mindest-Bestandsmengen mit dem Sensorsystem und Speicherung in der Kommunikationseinrichtung ,
- Vervollständigung der Belegung auf den Sollbestand im Lagersystem

Die Zuordnung eines Gütertyps zu einem der Kompartimente kann mittels eines Handscanners erfolgen.

Der Handscanner weist beispielsweise eine drahtlose Kommunikationsschnittstelle zu der Kommunikationseinrichtung auf, um ein Zuordnungssignal zur Zuordnung des Gütertyps zu einem der Kompartimente an die Kommunikationseinrichtung zu übertragen.

Nach Ausführungsformen der Erfindung ist des Weiteren ein Verfahren zum Betrieb des Lagersystems mit folgenden Schritten vorgesehen:
- Erfassung der Belegungsinformation zumindest eines der Kompartimente,
- Vergleich der erfassten Belegungsinformation mit einem gespeicherten Belegplan durch die Kommunikationseinrichtung,
- sofern durch die Kommunikationseinrichtung eine Diskrepanz zwischen der erfassten Belegungsinformation und dem Belegplan detektiert wird, Erzeugung eines Fehlbelegungssignals durch die Kommunikationseinrichtung und Senden des Fehlbelegungssignals über den Datenbus an die Adresse derjenigen Sensorbaugruppe, von der die Belegungsinformation erfasst worden ist.

Die optischen Signalisierungsmittel können über die Sensorbaugruppe mit dem Datenbus verbunden sein und die elektronische Steuerung der Sensorbaugruppe, die das Fehlbelegungssignal über den Datenbus von der Kommunikationseinrichtung empfängt, kann das optische Signalisierungsmittel der betreffenden Sensorbaugruppe zur Ausgabe des Fehlbelegungssignals ansteuern.

Im Folgenden werden weitere Merkmale möglicher Ausführungsformen beschrieben, wobei die Merkmale untereinander und mit den vorstehend benannten Merkmalen kombinierbar sind.

Die Sensorbaugruppe kann ein Trägerelement mit mindestens zwei Sensorelementen aufweisen wobei die Sensorelemente an unterschiedlichen Außenflächen des Trägerelements angeordnet sind.

Bevorzugt ist, dass das Trägerelement einen eckigen, bevorzugt einen dreieckigen oder einen viereckigen insbesondere einen quadratischen oder rechteckigen Querschnitt hat.

Es wird vorgeschlagen, dass das Trägerelement eckig, kreisförmig, kreuzförmig, y-förmig, streifenförmig, gitterförmig, mäanderförmig und/oder sternförmig ausgebildet ist.

Es wird weiter vorgeschlagen, dass das Trägerelement starr, flexibel oder semiflexibel ist oder zumindest zwei starre, flexible oder semiflexible Abschnitte aufweist, die miteinander verbunden sind.

Das Trägerelement kann aus einer Folie oder aus mehreren Schichten aus gleichen oder unterschiedlichen Folien und/oder Materialien aufgebaut sein.

Des Weiteren kann vorgesehen sein, dass das Trägerelement zumindest teilweise als Leiterplatte mit Leiterbahnen ausgebildet ist oder zumindest elektrische Leiterstrukturen zur elektrischen Kontaktierung und/oder Weiterleitung der Signale der Sensorelemente und/oder weiterer elektrischer und/oder elektronischer Bauteile und/oder zum Anschluss an einen Datenbus und/oder an eine Stromversorgung und/oder zur Verbindung an zumindest eine weitere Sensorbaugruppe aufweist.

In Weiterbildung wird vorgeschlagen, dass ein Sensorelement jeweils als ein Signalgeber oder als ein Signalempfänger ausgebildet ist.

Vorteilhaft ist, dass bei dem Signalempfänger ein Prüfsignalgeber derart beigeordnet ist, dass der Signalempfänger Signale des beigeordneten Prüfsignalgebers direkt oder indirekt detektieren kann.

Des Weiteren wird vorgeschlagen, dass das zumindest erste Sensorelement einer ersten Außenfläche der Sensorbaugruppe zu dem zumindest zweiten Sensorelement einer zweiten Außenfläche der Sensorbaugruppe komplementär ausgebildet ist, insbesondere dass das erste Sensorelement als Signalgeber und das zweite Sensorelement als Signalempfänger oder dass das erste Sensorelement als Signalempfänger und das zweite Sensorelement als Signalgeber ausgebildet ist.

In Weiterbildung wird vorgeschlagen, dass die zumindest zwei Sensorelemente zueinander komplementär ausgebildet sind und an jeweils einander entgegengesetzten Außenflächen des Trägerelements angeordnet sind, insbesondere dass ein erstes Sensorelement an einer ersten Außenfläche als Signalgeber und das zweite Sensorelement an einer zweiten, zur ersten entgegengesetzten Außenfläche als Signalempfänger oder dass ein erstes Sensorelement an einer ersten Außenfläche als Signalempfänger und das zweite Sensorelement an einer zweiten, zur ersten entgegengesetzten Außenfläche als Signalgeber ausgebildet ist.

Vorteilhaft ist, dass die Sensorelemente auf oder in einer Außenfläche des Trägerelements zumindest teilweise integriert angeordnet sind.

Es kann vorgesehen sein, dass das von zumindest einem Signalgeber emittierte und das von zumindest einem Signalempfänger empfangene Signal ein magnetisches, ein elektromagnetisches oder ein akustisches Signal ist.

In Weiterbildung wird vorgeschlagen, dass der Signalgeber zumindest eine LED, eine OLED oder einen Piezokristall aufweist oder aus einem Array dieser Elemente gebildet ist.

Insbesondere wird vorgeschlagen, dass von zumindest einem Signalgeber IR-Licht emittiert wird.

Ferner wird vorgeschlagen, dass zumindest ein Sensorelement und/oder eine Leiterbahn gedruckt ist.

Weiter wird vorgeschlagen, dass am Träger eine Steuerelektronik angeordnet ist, wobei die Steuerelektronik die Sensorbaugruppe gegenüber anderen Sensorbaugruppen eindeutig identifiziert.

Ferner wird vorgeschlagen, dass die Steuerelektronik die Sensorelemente aktiviert und die Datensignale der Sensorelemente registriert, weiterverarbeitet und weiterleitet.

In Weiterbildung wird vorgeschlagen, dass das von der Steuerelektronik erzeugte und vom Signalgeber emittierte Signal in seiner Frequenz und/oder seiner Intensität variierbar ist.

In nochmaliger Weiterbildung wird vorgeschlagen, dass das emittierte Signal derart getaktet ist, dass das Signal kodiert ist.

Ferner wird vorgeschlagen, dass ein Betriebszustand bei den vorhandenen Sensorelementen durch die Steuerelektronik einzeln, gruppenweise oder alle auf einmal aktivierbar oder abfragbar ist, insbesondere dass ein Signalgeber ein Signal abgibt oder dass ein Signalempfänger abgefragt wird, ob er ein Signal empfängt.

Weiter wird vorgeschlagen, dass das Trägerelement an zumindest einer Außenfläche mehr als zwei, bevorzugt eine Vielzahl von Sensorelementen aufweist, die zueinander definiert angeordnet, bevorzugt auf zumindest einer Linie oder in zumindest einer Reihe angeordnet sind.

In Weiterbildung wird vorgeschlagen, dass Sensorelemente für unterschiedliche Signalarten gemeinsam an einer Außenfläche des Trägerelements gruppiert und/oder alternierend angeordnet sind.

In nochmaliger Weiterbildung wird vorgeschlagen, dass auf einer Außenfläche jeweils nur Sensorelemente einer Art angeordnet sind, insbesondere, dass die an einer Außenfläche angeordneten Sensorelemente jeweils nur als Signalgeber oder jeweils nur als Signalempfänger ausgebildet sind.

Es kann vorgesehen sein, dass Signalgeber und Signalempfänger gemeinsam an einer Außenfläche des Trägerelements gruppiert und/oder alternierend angeordnet sind.

Ferner wird vorgeschlagen, dass eine Markierung zur späteren Positionierung und/oder Ausrichtung der Sensorbaugruppe vorhanden ist.

Weiter wird vorgeschlagen, dass eine Fixiervorrichtung zur späteren Positionierung und/oder Fixierung der Sensorbaugruppe vorhanden ist.

Weiter wird vorgeschlagen, dass das Trägerelement an zumindest einer Außenfläche eine Klebefläche aufweist.

In Weiterbildung kann vorgesehen sein, dass die Klebefläche zumindest zeitweise mit einer lösbaren Deckfolie abgedeckt ist.

Weiter ist eine Sensorsystem für eine Belegerkennung mit zumindest zwei Sensorbaugruppen vorgesehen, wobei die Sensorbaugruppen in zumindest einer Position derart zueinander angeordnet sind, dass sie zumindest teilweise einen Überwachungsraumes umfassen und dass ein emittiertes Signal zumindest eines Signalgebers einer ersten Sensorbaugruppe von zumindest einem Signalempfänger einer zweiten Sensorbaugruppe in zumindest einem Belegzustand detektierbar ist, so dass ein empfangenes Signal als erster Belegzustand und ein gesendetes, aber nicht empfangenes Signal als zweiter Belegzustand interpretiert wird.

In Weiterbildung wird vorgeschlagen, dass die Sensorbaugruppen in zumindest einer Position derart zueinander angeordnet sind, dass sich zumindest jeweils eine ihrer Außenflächen zumindest teilweise gegenüberliegen und dass an den sich zumindest teilweise gegenüberliegenden Außenflächen jeweils zumindest ein Sensorelement angeordnet ist, die zueinander jeweils komplementär sind, insbesondere dass das zumindest erste Sensorelement als Signalgeber und dass das zumindest zweite Sensorelement als Signalempfänger oder dass das zumindest erste Sensorelement als Signalempfänger und dass das zumindest zweite Sensorelement als Signalgeber ausgebildet ist.

Ferner wird vorgeschlagen, dass zumindest bei einer der Sensorbaugruppen auf zumindest einer der nicht der anderen Sensorbaugruppe zugewandten Außenfläche zumindest ein weiteres Sensorelement angeordnet ist.

Weiter wird vorgeschlagen, dass zumindest bei einer der Sensorbaugruppen auf der jeweils von der anderen Sensorbaugruppe abgewandten Außenfläche zumindest ein weiteres Sensorelement angeordnet ist.

In Weiterbildung wird vorgeschlagen, dass das zumindest eine weitere Sensorelement komplementär ist zu der Art des zumindest einen Sensorelements auf der der zumindest einen anderen Sensorbaugruppe zugewandten Außenfläche, insbesondere dass das Sensorelement als Signalgeber und das Sensorelement als Signalempfänger oder dass das Sensorelement als Signalempfänger und das Sensorelement als Signalgeber ausgebildet ist.

In nochmaliger Weiterbildung wird vorgeschlagen, dass in Bezug auf die Anordnung der zumindest zwei Sensorbaugruppen die Sensorelemente jeweils einer Art alle dieselbe Orientierung aufweisen, insbesondere dass alle Signalgeber in eine erste Richtung und alle Signalempfänger in eine zweite Richtung orientiert sind.

Die erste Richtung und zweite Richtung können gegensätzlich zueinander orientiert sein.

Weiter wird vorgeschlagen, dass an einer Außenfläche einer Sensorbaugruppe oder eines Abschnitts einer Sensorbaugruppe mit Sensorelement zumindest zwei, bevorzugt eine Vielzahl von Sensorelementen angeordnet sind.

Ferner wird vorgeschlagen, dass die Sensorelemente zumindest zweier benachbarter Sensorbaugruppen jeweils annähernd auf einer gemeinsamen Achse positioniert sind.

Des Weiteren wird vorgeschlagen, dass an den einander zugewandten Außenflächen einer Sensorbaugruppe oder eines Abschnitts einer Sensorbaugruppe mit Sensorelementen jeweils nur Sensorelemente einer Art angeordnet sind, insbesondere dass an einer jeweiligen Außenfläche angeordnete Sensorelemente nur als Signalgeber oder nur als Signalempfänger ausgebildet sind.

In Weiterbildung wird vorgeschlagen, dass die Sensorelemente soweit zueinander beabstandet sind, dass pro kleinster zu messender Einheit wenigstens ein Paar Sensorelemente vorhanden ist, insbesondere dass pro kleinster zu messender Einheit zumindest je ein Signalgeber und ein Signalempfänger vorhanden ist, bevorzugt dass pro kleinster zu messender Einheit mehrere Signalgeber und mehrere Signalempfänger vorhanden sind.

Weiter wird vorgeschlagen, dass eine Steuerelektronik jeweils komplementär wirkende und miteinander agierende Sensorelemente der zumindest zwei Sensorbaugruppen oder verschiedener Sensorbaugruppen paar- oder gruppenweise koordiniert, insbesondere miteinander synchronisiert und insbesondere die Abgabe und die Erfassung von Signalen steuert.

In Weiterbildung wird vorgeschlagen, dass der Überwachungsraum in zumindest zwei Teilbereiche unterteilt ist, wobei die Teilbereiche von der Steuerelektronik jeweils logisch verwaltet werden, insbesondere zumindest ein Signalgeber und ein Signalempfänger oder eine Gruppe von komplementär wirkenden und miteinander agierenden Sensorelementen einem ersten Teilbereich zugeordnet und zumindest ein weiterer Signalgeber und ein weiterer Signalempfänger oder eine Gruppe von weiteren, komplementär wirkenden und miteinander agierenden Sensorelementen einem weiteren Teilbereich zugeordnet sind.

In nochmaliger Weiterbildung wird vorgeschlagen, dass die Steuerelektronik die erfassten Signale auswertet und die Signale und/oder die ermittelten Belegzustände anhand einer Kommunikationsreinrichtung an eine übergeordnete Lagervorrichtung oder an eine übergeordnete Steuereinheit weitermeldet.

Weiter ist vorgesehen eine Lagervorrichtung zur Lagerung und Verwaltung von Lagergut, insbesondere von Stück- und/oder Schüttgut mit mindestens einem Überwachungsraum zur Aufnahme des Lagerguts, und einem Sensorsystem.

Es wird vorgeschlagen, dass der Belegzustand und oder der Füllungsgrad des Überwachungsraum von zumindest zwei, annähernd gegenüberliegenden Sensorelementen überwacht ist, wobei in zumindest einem Belegzustand ein emittiertes Signal zumindest eines Signalgebers einer ersten Sensorbaugruppe von zumindest einem Signalempfänger einer zweiten Sensorbaugruppe detektierbar ist, so dass ein empfangenes Signal als erster Belegzustand und ein gesendetes, aber nicht empfangenes oder ein gedämpft empfangenes Signal als zweiter Belegzustand interpretierbar ist, wobei die Kombination mehrerer Belegzustände als Füllgrad interpretierbar ist.

Ferner wird vorgeschlagen, dass der Überwachungsraum von zumindest zwei Begrenzungselementen oder von zumindest zwei Abschnitten eines Begrenzungselements zumindest teilweise begrenzt ist, wobei sich die Begrenzungselemente oder die Abschnitte jeweils mit zumindest einer Außenfläche zumindest teilweise annähernd gegenüberliegen.

Weiter wird vorgeschlagen, dass an jeweils einem Begrenzungselement oder an jeweils einem Abschnitt zumindest eine Sensorbaugruppe angeordnet ist.

Des Weiteren kann vorgesehen sein, dass zumindest eine Sensorbaugruppe an einer dem Überwachungsraum zugewandten Außenfläche eines Begrenzungselements angeordnet ist.

In Weiterbildung wird vorgeschlagen, dass zumindest eine Sensorbaugruppe auf der vom Überwachungsraum abgewandten Außenfläche des jeweiligen Begrenzungselements angeordnet ist.

In nochmaliger Weiterbildung wird vorgeschlagen, dass zumindest an einer Seite des Überwachungsraums zumindest eine Sensorbaugruppe in das jeweilige Begrenzungselement zumindest teilweise integriert ist.

Es kann auch vorgesehen sein, dass das Begrenzungselement zumindest eine Signalöffnung aufweist, so dass die zumindest eine integrierte oder die zumindest eine, an der dem Überwachungsraum abgewandten Außenfläche angeordnete Sensorbaugruppe ein Signal zu zumindest einer weiteren Sensorbaugruppe durch die Signalöffnung hindurch senden und/oder von zumindest einer weiteren Sensorbaugruppe empfangen kann.

Diese Ausführung ist maßgeblich daran beteiligt, dass Sensorbaugruppen mit Sensoren auf einander entgegen gesetzten Außenflächen eines Trägers verwendet werden können, da dadurch Sensoren beider Seiten am Prozess beteiligt sein und mit anderen Sensoren interagieren können. Auf der anderen Seite ist es dadurch auch möglich, die Hälfte der sonst notwendigen Sensorbaugruppen einzusparen, da mit dieser Ausführungsform Sensoren Zugriff auf zwei Seiten erhalten und nicht jeweils eine Seite durch ein normalerweise undurchlässiges Begrenzungselement behindert wird bzw. sonst nur einseitig bestückte Sensoren verwendet werden.

In Weiterbildung kann vorgesehen sein, dass die Signalöffnung zumindest teilweise durch einen Sensorelement ausgefüllt ist und/oder dass die Signalöffnung zumindest teilweise durch ein für das Signal durchlässiges Material abgedeckt und/oder aufgefüllt ist.

Weiter kann vorgesehen sein, dass zumindest ein Begrenzungselement eine Vorrichtung oder Aussparung zur zumindest teilweisen Aufnahme zumindest einer Sensorbaugruppe aufweist.

Insbesondere kann weiter vorgesehen sein, dass die Vorrichtung oder Aussparung an zumindest einer Außenfläche eine Öffnung zum Einbringen eines Begrenzungselements aufweist.

Des Weiteren kann vorgesehen sein, dass zumindest eine Sensorbaugruppe an zumindest einem Begrenzungselement in Bezug auf einen Bezugspunkt der Lagervorrichtung und/oder des Begrenzungselements und/oder zumindest einer weiteren Sensorbaugruppe in einer definierten Position fixiert ist.

Es wird vorgeschlagen, dass zumindest eine Sensorbaugruppe an zumindest einem Begrenzungselement angeklebt ist.

Weiter wird vorgeschlagen, dass zumindest zwei, bevorzugt eine Vielzahl von Sensorbaugruppen annähernd parallel zueinander an einem Begrenzungselement angeordnet sind, wobei die in einer Ebene angeordneten Sensorelemente eine Sensormatrix bilden.

An jeweils zumindest zwei gegenüberliegenden und somit annähernd parallel zueinander ausgerichtete Begrenzungselementen können zumindest ein, bevorzugt mehrere Trennelemente angeordnet sein, wobei die Trennelemente quer zu den Begrenzungselemente verlaufen, so dass zumindest zwei, bevorzugt eine Vielzahl von Überwachungsräumen gebildet ist.

In Weiterbildung wird vorgeschlagen, dass an zumindest einem Begrenzungselement an zumindest einer Außenfläche zumindest eine Fixiervorrichtung für zumindest ein Trennelement vorhanden ist.

In nochmaliger Weiterbildung wird vorgeschlagen, dass eine Vielzahl von Fixiervorrichtungen an zumindest einer Seite eines Begrenzungselements angeordnet sind, so dass eine variable Unterteilung des Überwachungsraums möglich ist.

Weiter wird vorgeschlagen, dass jedem Überwachungsraum zumindest ein Signalgeber und ein Signalempfänger zugeordnet ist.

Insbesondere wird vorgeschlagen, dass die Lagervorrichtung ein Regal ist und zumindest ein erstes Begrenzungselement einen Regalboden bildet.

Weiter wird vorgeschlagen, dass jeweils weitere Begrenzungselemente weitere Regalebenen im Regal bilden, wobei der Raum zwischen jeweils zwei Regalebenen zumindest einen Überwachungsraum bildet.

Ferner wird vorgeschlagen, dass die zumindest eine Sensorbaugruppe entsprechend der Schwerkraft jeweils unterhalb des jeweiligen Regalbodens einer Regalebene angeordnet ist.

Sensorelemente verschiedener Regalebenen können entsprechend ihrer jeweiligen Position auf der Sensorbaugruppe jeweils annähernd auf einer gemeinsamen Achse ausgerichtet sein, wobei die Achse entsprechend zur Schwerkraft vertikal verläuft.

Weiter wird vorgeschlagen, dass Sensorelemente verschiedener Regalebenen ihrer jeweiligen Art entsprechend jeweils in nur eine Richtung orientiert sind, insbesondere das alle Signalgeber verschiedener Ebenen nur in eine erste Richtung orientiert sind und dass alle Signalempfänger verschiedener Ebenen nur in eine zweite Richtung orientiert sind.

In Weiterbildung wird vorgeschlagen, dass alle Signalgeber entsprechend der Schwerkraft von oben nach unten orientiert und alle Signalempfänger entgegengesetzt von unten nach oben orientiert sind.

Ferner wird vorgeschlagen, dass der Regalboden jeweils einer Regalebene gegenüber der horizontalen Raumebene in zumindest einer Richtung ein Gefälle aufweist.

Insbesondere wird vorgeschlagen, dass die Lagervorrichtung ein Schrank mit zumindest einer Schublade ist, wobei zumindest jeweils zwei gegenüberliegende Seitenwände der Schublade als Begrenzungselemente einen Überwachungsraum zumindest teilweise umschließen.

In nochmaliger Weiterbildung wird vorgeschlagen, dass zumindest eine Sensorbaugruppe in zumindest ein, eine Seitenwand bildendes, Begrenzungselement integriert ist.

Sensorelemente verschiedener Begrenzungselemente können entsprechend ihrer jeweiligen Position auf der Sensorbaugruppe jeweils annähernd auf einer gemeinsamen Achse ausgerichtet sein, wobei die Achse quer zur Schwerkraft F annähernd horizontal verläuft.

Weiter wird vorgeschlagen, dass Sensorelemente verschiedener Begrenzungselemente ihrer jeweiligen Art entsprechend jeweils in nur eine Richtung orientiert sind, insbesondere das alle Signalgeber verschiedener Begrenzungselemente nur in eine erste Richtung orientiert sind und dass alle Signalempfänger verschiedener Begrenzungselemente nur ein eine zweite Richtung orientiert sind.

Des Weiteren wird vorgeschlagen dass alle Signalgeber entsprechend der Auszugsrichtung der Schublade von ihrer Rückwand zu ihrer Stirnwand orientiert sind und alle Signalempfänger entgegengesetzt von ihrer Stirnwand zu ihrer Rückseite orientiert sind.

Weiter wird vorgeschlagen, dass zumindest ein weiteres, quer zur Ausziehrichtung der Schublade angeordnetes Begrenzungselemente vorhanden ist.

Ferner wird vorgeschlagen, dass zumindest ein parallel zur Ausziehrichtung der Schublade angeordnetes Trennelement vorhanden ist.

In Weiterbildung wird vorgeschlagen, dass die Schublade einen Schubladenstecker aufweist, der die Schublade zumindest im geschlossenen Zustand elektrisch mit einer Energieversorgung und/oder einer Datenleitung im Korpus des Schranks verbindet.

Ferner wird vorgeschlagen, dass eine Steuereinheit zumindest einen Belegzustand zumindest eines Überwachungsraums oder eines Teils eines unterteilten Überwachungsraums oder einem Teilbereich anfragt und das Ergebnis auswertet und/oder an ein übergeordnetes Verwaltungssystem weitermeldet.

Weiter wird vorgeschlagen, dass die Steuereinheit zumindest jeweils zwei zusammenwirkende Sensorelemente zumindest zweier verschiedener Sensorbaugruppen der zumindest Teilmengen zusammen wirkender Sensormatrizen logisch verwaltet, und so zumindest einen logischen Teilbereich definiert, der sich in einer Ebene entlang einer Verlaufsrichtung einer ersten Sensorbaugruppe und/oder quer zur Verlaufsrichtung einer ersten Sensorbaugruppe über zumindest eine weitere, parallel angeordnete Sensorbaugruppe erstreckt.

In Weiterbildung wird vorgeschlagen, dass zumindest ein Teilbereich genau einer Einheit eines einzulagernden Lagerguts entspricht.

In nochmaliger Weiterbildung wird vorgeschlagen, dass zumindest ein logischer Teilbereich zumindest einer Anordnung aus Begrenzungselementen und/oder Trennelementen entspricht, insbesondere der Größe zumindest eines aus Begrenzungselementen und/oder Trennelementen gebildeten Teilbereichs entspricht.

In nochmaliger Weiterbildung wird vorgeschlagen, dass die Steuereinheit in einer Initialisierung die Teilbereiche aufgrund der Anordnung der Begrenzungselementen und/oder Trennelementen untereinander erfasst und entsprechend den Überwachungsraum in seine logischen Teilbereiche definiert und im Verwaltungssystem abspeichert.

Weitere Merkmale, Einzelheiten und Vorzüge der Erfindung ergeben sich aus den Schutzansprüchen, deren Wortlaut durch Bezugnahme zum Inhalt der Beschreibung gemacht wird. Die vorstehend genannten und die nachstehenden noch zu erläuternden Merkmale sind nicht nur in der jeweils angegebenen Kombination, sondern auch in anderen Kombinationen oder in Alleinstellung verwendbar, ohne den Rahmen der vorliegenden Erfindung zu verlassen.

Ausführungen und Beispiele der Erfindung sind in den Zeichnungen dargestellt und werden in der nachfolgenden Beschreibung näher erläutert. Hierbei zeigen:
Fig. 1: eine perspektivische Ansicht einer Sensorbaugruppe,
Fig. 2: verschiedene Ansichten einer Sensorbaugruppe,
Fig. 3: perspektivische Ansichten möglicher Querschnitte einer Sensorbaugruppe,
Fig. 4: Draufsichten auf mögliche Formen einer Sensorbaugruppe,
Fig. 5: eine perspektivische Ansicht einer Sensorbaugruppe,
Fig. 6: eine perspektivische Ansicht einer Sensorbaugruppe,
Fig. 7: eine Vorderansicht einer Sensorbaugruppe,
Fig. 8: eine Vorderansicht einer Sensorbaugruppe,
Fig. 8a eine Vorderansicht einer Sensorbaugruppe gemäß einem Vergleichsbeispiel,
Fig. 9: eine Vorderansicht einer Sensorbaugruppe mit einem Teilschnitt,
Fig. 10 eine Seitenansicht einer Sensorbaugruppe,
Fig. 11 ein Diagramm möglicher Signale,
Fig. 12: eine Seitenansicht einer Sensorbaugruppe,
Fig. 13 eine Draufsicht auf eine Sensorbaugruppe,
Fig. 14: eine schematische Darstellung eines Sensorsystems,
Fig. 15: eine Seitenansicht eines Sensorsystems,
Fig. 16: eine Seitenansicht eines Sensorsystems,
Fig. 17: eine Seitenansicht eines Sensorsystems gemäß einem Vergleichsbeispiel.
Fig. 18: schematische Darstellungen einer Lagervorrichtung,
Fig. 19: schematische Darstellungen einer Lagervorrichtung mit verschiedenen Belegzuständen,
Fig. 20: Seitenansichten zur Anordnung einer Sensorbaugruppe an einer Lagervorrichtung,
Fig. 21: eine Seitenansicht von Begrenzungselementen,
Fig. 22: eine Seitenansicht und einen Schnitt eines Begrenzungselements
Fig. 23: perspektivische Darstellungen von Begrenzungselementen,
Fig. 24: perspektivische Darstellungen von Begrenzungselementen,
Fig. 25: eine perspektivische Darstellung eines Begrenzungselements gemäß einem Vergleichsbeispiel,
Fig. 26: eine perspektivische Darstellung eines Begrenzungselements gemäß einem Vergleichsbeispiel,
Fig. 27: eine perspektivische Darstellung eines Begrenzungselements gemäß einem Vergleichsbeispiel,
Fig. 28: eine perspektivische Darstellung sowie Drauf- und Detailansicht eines Begrenzungselements,
Fig. 29: eine perspektivische Darstellung eines Regals,
Figur 30 eine als Regal ausgebildete Lagervorrichtung,
Fig. 31: einen Regalboden und einen Schnitt durch mehrere Regalböden gemäß einem Vergleichsbeispiel,
Fig. 32: eine schematische Darstellung eines Regalsystems,
Fig. 33: ein Blockdiagramm des Regalsystems aus Fig. 32,
Fig. 34 ein Ablaufdiagramm der Einrichtung des Regalsystems aus den Fig. 32 und 33, und
Fig. 35 ein Ablaufdiagramm der Betriebes des Regalsystems aus den Fig. 32 und 33.

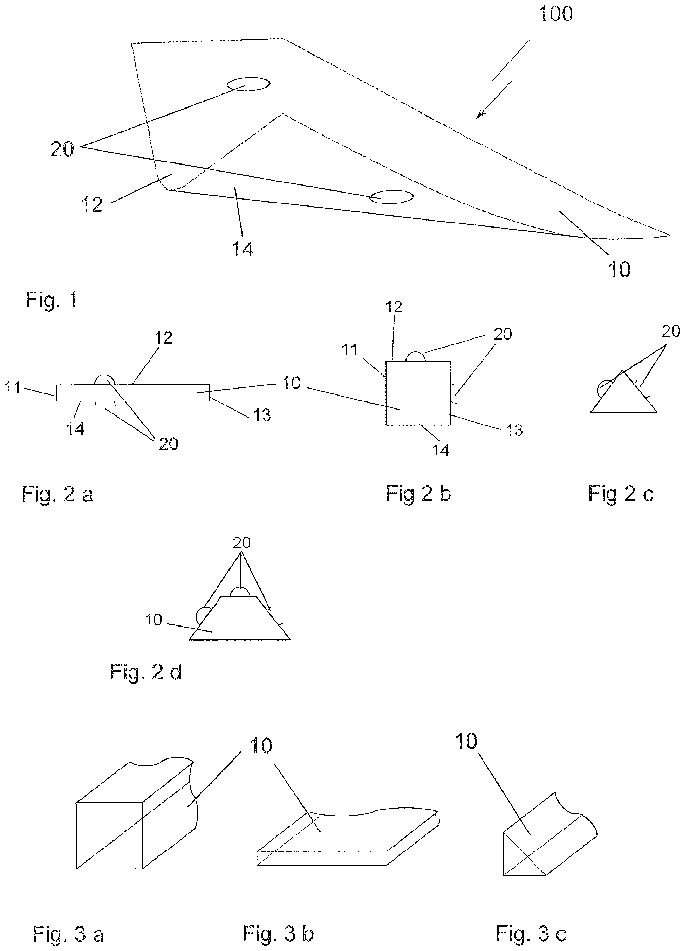

Fig. 1 zeigt eine perspektivische Ansicht einer Sensorbaugruppe 100, die in einer Ausführung mit einem Träger 10 aus einem flexiblen Material hergestellt ist. Man sieht von schräg oben auf die vordere linke Ecke, die hier hochgebogen dargestellt ist und einen Blick sowohl auf die Oberseite 12 als auch auf die Unterseite 14 ermöglicht. Auf der Sensorbaugruppe 100 ist sowohl auf der Ober- als auch auf die Unterseite 12, 14 jeweils zumindest ein Sensorelement 20 angeordnet.

Diese Anordnung ermöglicht der Sensorbaugruppe in zwei Richtungen zu funktionieren (Fig. 2a). Im Prinzip kann jede der Außenflächen der Sensorbaugruppe mit Sensorelementen ausgestattet werden, so dass eine Sensorbaugruppe in alle drei Raumachsen jeweils in zwei Richtungen funktionieren könnte. In Fig. 2b ist eine solche Sensorbaugruppe mit den Sensorelementen zumindest an zwei Seitenflächen 11, 12 in einer Draufsicht dargestellt. Auf die Darstellung von Sensorelementen in den restlichen Seitenwänden 13, 14 sowie den Stirnflächen wurde verzichtet. Eine Sensorbaugruppe wie in Fig. 2b könnte mit weiteren Baugruppen jeweils um 90° verschwenkt einen Raum an seinen Raumgrenzen überwachen. Eine Sensorbaugruppe gem. Fig. 2c könnte kombiniert mit weiteren Sensorbaugruppen einen Raum jeweils diagonal überwachen, mit einer Bauform wie in Fig. 2d auch noch in den direkten Raumachsen.

Dabei kann der Querschnitt einer Sensorbaugruppe mehrere mögliche Formen annehmen (Fig. 3). Zur Aufnahme entsprechender Sensorelemente sind diejenigen Formen am besten geeignet, die bzgl. der Dimensionen oder der Anzahl der verbauten Sensorelemente eine gerade Fläche zur Verfügung stellen, wozu sich ein Querschnitt mit Ecken am eignet.

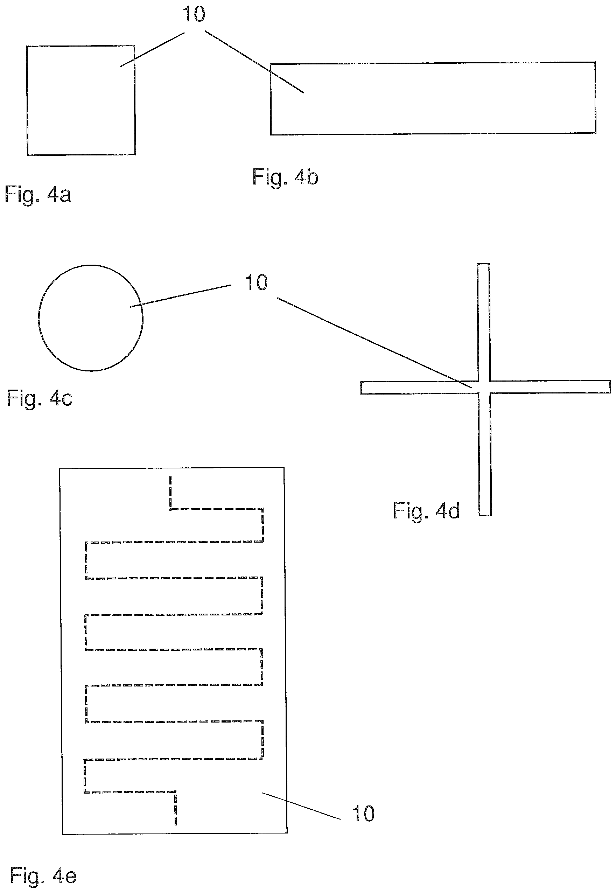

Fig. 4 zeigt die Draufsichten mehrerer möglicher Formen von Sensorbaugruppen zur bestmöglichen Anpassung an den zu überwachenden Raum und dessen Bauform (Fig. 4a - 4c). Soll die Sensorbaugruppe gegenüber der Bauform des zu überwachenden Raums optimiert werden, so lässt sich die Baugruppe mit einem nicht vollflächigen, aber in einer den Raum dennoch bestmöglich abdeckenden Form herstellen, so z.B kreuzförmig (Fig. 4d) oder mäanderförmig (Fig. 4e), wobei die Sensoren auf der gestrichelten Linie aufgesetzt sein können oder die Form des Trägers ist schmal und folgt der gestrichelten Linie.

Die Sensorbaugruppe ist in einer Ausführung als flacher Streifen ausgeführt (Fig. 4b), d.h. die Höhe ist dabei sehr viel geringer als die Breite, wobei die Breite geringer als die Länge ist. Es ist auch möglich eine längere Sensorbaugruppe aus einem Träger 10 mit zwei oder auch aus mehreren Abschnitten 10a, 10 b, die später die Sensorelemente aufnehmen, zu bilden und die Abschnitte untereinander mit jeweils einem flexiblen Teilabschnitt zu verbinden, wobei der Teilabschnitt insbesondere auch die elektrischen Leitungen für die Stromversorgung und die Signale der Sensorelemente enthält.

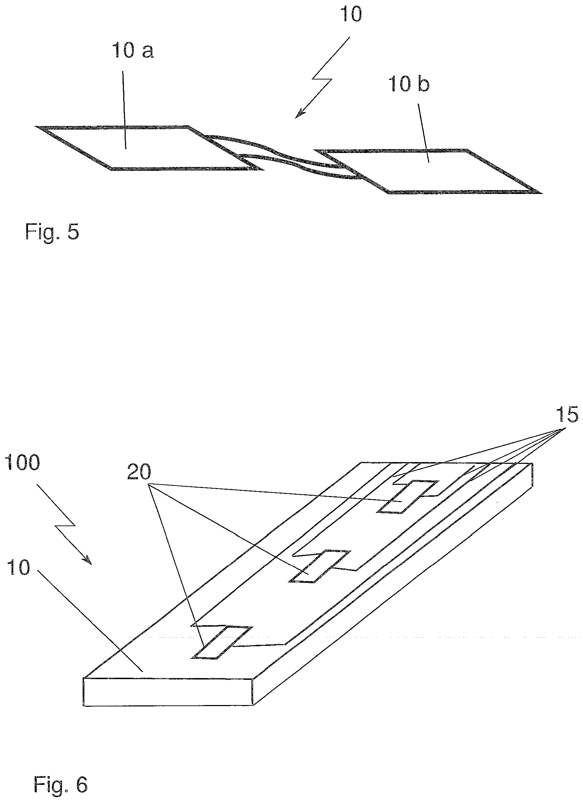

Fig. 6 zeigt eine perspektivische Ansicht einer Sensorbaugruppe 100 in einer Ausführung mit einem streifenförmigen Träger 10. Der Träger kann dabei aus einem starren oder aus einem flexiblen Material oder aber auch aus einem Verbund mehrerer Schichten gleichen oder unterschiedlichen Materials hergestellt sein. Der Träger 10 fungiert in dieser Ausführung gleich mit als Leiterplatte und ist mit entsprechenden Leiterbahnen 15 sowie Punkten zur Kontaktierung der Sensorelemente und/oder evtl. weiterer elektrischer Bauteile oder -gruppen ausgestattet. Die Leiterbahnen sowie auch die Kontaktflächen für die Sensoren können direkt auf den Träger oder auch auf einer Folie welche später auf den Träger auflaminiert wird, aufgebracht werden.

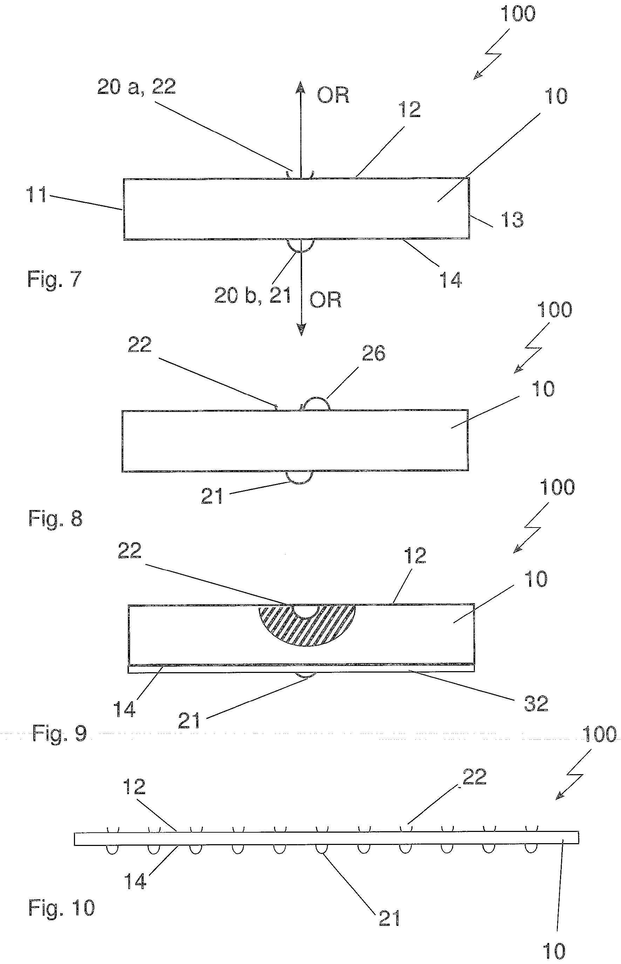

Fig. 7 zeigt die Vorderansicht einer Sensorbaugruppe 100 mit jeweils einem auf einer Außenfläche 12, 14 angeordneten Sensorelement 20. Die Sensorelemente 20 sind jeweils als Exemplare einer Art, und zwar als Signalgeber 21 oder als Signalempfänger 22 ausgebildet. Signalgeber und -empfänger sind für Signale einer Art ausgelegt. Nach dem Sender-Empfänger Prinzip können das alle Arten von sende- und empfangsfähigen Signalen sein, insbesondere Lichtsignale, bevorzugt IR-Licht oder akustische Signale, bevorzugt Ultraschallsignale. In den weiteren Ausführungsbeispielen wird von Lichtsignalen ausgegangen. Die Signalgeber 21 sind hier schematisch als Kreise oder geschlossene Halbkreise dargestellt, während die Signalempfänger 22 schematisch als offene Halbkreise bzw. "Schüsseln" mit der Öffnung von der entsprechenden Außenfläche wegzeigend dargestellt sind. Eine später eingeführte Orientierungsrichtung OR für die Sensorelemente 20 ist so zu verstehen, dass von ihrem Mittelpunkt und dem höchsten bzw. tiefsten Punkt der Kreislinie bzgl. der jeweiligen Außenfläche eine Gerade hindurchführt, die die hauptsächliche Aus- oder Eintrittsrichtung der Signale wiedergibt.

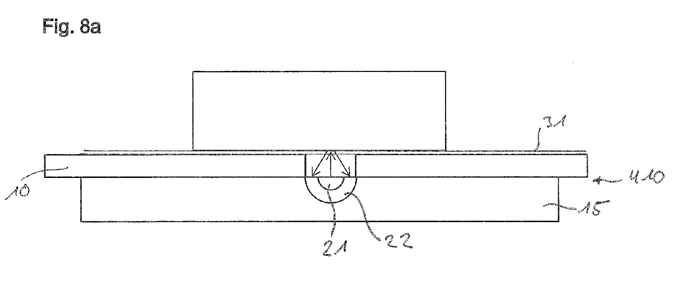

Bei einer weiteren Ausführung ist bei einem Signalempfänger 22 ein Prüfsignalgeber 26 beigeordnet, d.h. in unmittelbarer oder zumindest mittelbarer Entfernung des Signalempfängers 22 (Fig. 8). Damit kann die Funktionssicherheit der Sensorbaugruppe bzw. des übergeordneten Systems verbessern werden. Wenn ein Signal einer ersten gegenüberliegenden Sensorbaugruppe ausgesendet, aber keins empfangen wurde, kann hiermit die Funktionstüchtigkeit des Signalempfängers nochmals überprüft werden. Im Grunde genommen kann dasselbe Prinzip auch auf einen Signalgeber angewendet werden.

Bei einem Vergleichsbeispiel der Fig. 8a sind der Signalgeber 21 und der Signalempfänger 22 einer Sensorbaugruppe 100 paarweise auf der derselben Leiterplatte, insbesondere unmittelbar benachbart, angeordnet sind. Der Signalgeber 21 und der Signalempfänger 22 sind einer im Regalboden 410 befindlichen Ausnehmung zugeordnet, so dass ein von dem Signalgeber 21 abgegebenes Signal von dem Signalempfänger 22 durch die Ausnehmung gesendet bzw. empfangen werden kann. Dadurch ist ein kurzer Signalweg sichergestellt, so dass die Zuverlässigkeit der Sensorbaugruppe erhöht wird. Insbesondere kann die Ausnehmung von einer Folie abgedeckt sein, so dass eine Verschmutzung der Ausnehmung und somit des Signalgeber 21 und des Signalempfängers 22 verhindert ist.

Die Sensorelemente 20 können sowohl als Signalgeber 21 als auch als Signalempfänger 22 zumindest teilweise an einer jeweiligen Außenfläche in den Träger 10 integriert sein, um einerseits ein entsprechendes Sensorelement 20 zu schützen oder auch um auch eine glatte Außenseite zu erhalten. In Fig. 9 ist auf einer Außenfläche 12 in einem Teilschnitt ein vollkommen in den Träger 10 integrierter Signalempfänger 22 gezeigt. An der Unterseite 14 erfolgt die Integration des Signalgebers mittels einer auflaminierten weiteren Schicht 32 derart, dass der Signalgeber 21 als zumindest teilweise in den Träger integriert gilt, wobei die Schutzschicht 32 an den entsprechenden Stellen der Position eines Sensorelements 20 Aussparungen aufweist und damit auch die Sensorelemente bzw. die entsprechenden Leiterbahnen schützt oder eine glatte Außenfläche bereitstellt (Fig. 9).

Der Signalsender 21 könnte alternativ auch auf der Oberseite des Regalbodens angeordnet sein (Bezugszeichen 21'), insbesondere unmittelbar beanchbart zum Signalempfänger 22. Das vom Signalsender ausgesendete Signal kann dadurch einfacher vom Signalempfänger empfangen werden, so die Distanz zwischen Signalempfänger und Signalsender kürzer ist bzw. das Signal nicht den Aufnahmeraum des Kompartiments queren muss. Insbesondere kann das Signal schwächer ausgebildet sein, so dass die Gefahr einer Beeinflussung durch die Signale benachbarter Signalsender geringer ist. Ein weiterer Vorteil besteht darin, dass keine gegenseitige Ausrichtung des Signalempfängers und des Signalsenders im Kompartiment erfolgen muss. Die Ausrichtung erfolgt bereits durch die Anordnung auf der Leiterplatte. Dies hat den Vorteil, dass bei der Herstellung des Regals eine größere Herstellungstoleranz möglich ist, da keine Ausrichtung der Regalboden bzw. der Sensorbaugruppen an den Regalböden zueinander erforderlich ist.

Fig. 10 zeigt eine Seitenansicht einer Sensorbaugruppe 100 mit einer Vielzahl von an einer jeweiligen Außenfläche 12, 14 angeordneten Sensorelementen, wobei an einer Außenfläche jeweils nur Sensorelemente einer Art angeordnet sind. Auf diese Weise lassen sich viele Sensorbaugruppen kaskadierend, d.h. in immer eine Richtung orientiert miteinander kombinieren. Der Abstand der Sensorelemente auf jeweils einer Außenfläche untereinander kann so gewählt sein, dass ein Signalgeber immer nur ein Signalempfänger anspricht oder auch mehrere Signalempfänger, indem die Sensorelemente 20 so nah beieinander angeordnet sind, dass sich die Signalkegel auf der Empfängerseite überlappen.

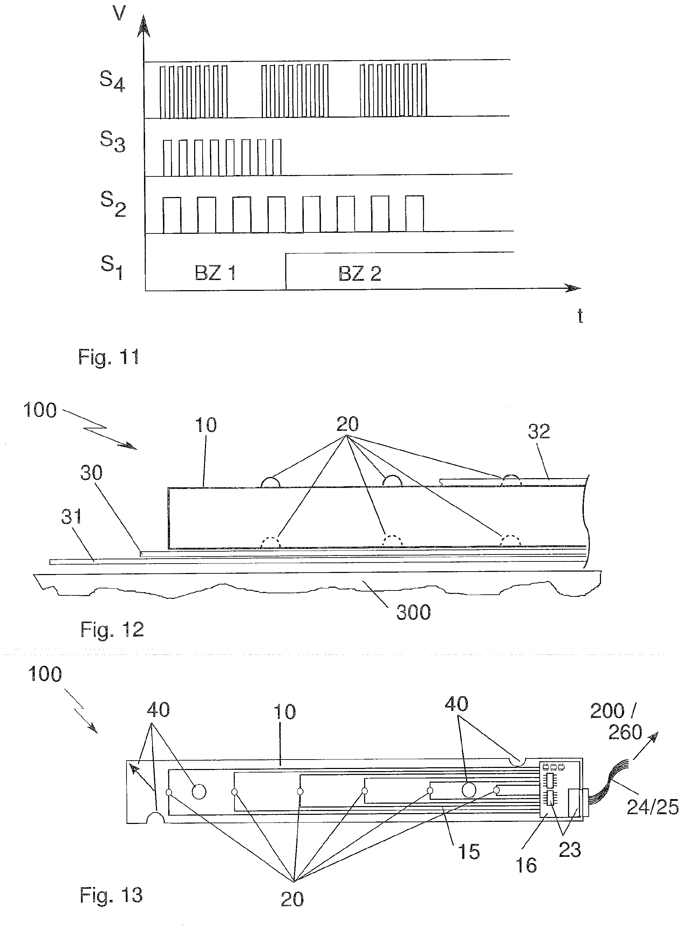

Fig. 11 zeigt ein Diagramm bezüglich mehrerer Signale an. Ein erstes Signal S1 zeigt zwei verschiedene Belegzustände BZ1 und BZ2 an wobei im Belegzustand BZ1 kein Signal S1 empfangen wird und damit als mit einem Lagergut G belegter Sensorbereich 21/22 interpretiert wird, wohingegen im Belegzustand BZ2 eine Signal S1 empfangen wird und damit als ein Sensorbereich ohne ein Lagergut G interpretiert wird. Signale 2-4 zeigen Signale mit unterschiedlicher Intensität, Modulation oder mit einzelnen Frequenzblöcken. Diese Signale können zur Verbesserung der Signal- bzw. Datenintegrität verwendet werden oder aber auch, um insbesondere bei sich überlappenden Signalkegeln, einzelne Sensorelemente anzusprechen oder zu identifizieren.

Fig. 12 Zeigt eine Seitenansicht einer Sensorbaugruppe mit wieder einer Vielzahl von an gegenüberliegenden Außenflächen des Trägers 10 angeordneten Sensorelementen 20, wobei die oberen Sensorelemente 20 durch eine Schutzschicht 32 zumindest teilweise in eine Schutzschicht 32 eingebettet sind und somit eine annähernd glatte Oberfläche erreicht wird. Auf der gegenüberliegenden Außenfläche sind die Sensorelemente 20 hingegen vollkommen in den Träger integriert. Auf dieser Unterseite ist eine Klebeschicht 30 aufgebracht, die von einer nicht klebenden Deckschicht 31 bedeckt ist. Zumindest die Klebeschicht 30 hat an den Positionen der Sensorelemente 20 entsprechende Aussparungen, um die Sensorelemente 20 nicht zu beschädigen oder zu verunreinigen, und um später die Signale S ungehindert passieren zu lassen. Für eine spätere Montage wird die nicht klebende Deckschicht 31 von der Klebeschicht 30 entfernt, und kann so an einer Vorrichtung 300 ausgerichtet und mithilfe der Klebeschicht 30 an der Vorrichtung befestigt werden.

Fig. 13 zeigt in einer Draufsicht eine Sensorbaugruppe 100 mit einem Träger 10 und auf den Träger 10 befindlichen Leiterbahnen 15 sowie an die Leiterbahnen 15 angeschlossenen Sensorelemente 20. Am rechten Ende der Sensorbaugruppe ist eine kleine starre Leiterplatte angebracht, welche die zur Steuerung der Sensorelemente 20 notwendige Steuerelektronik 16 enthält sowie weitere elektrische oder elektronische Bauteile 23, zum Beispiel ein Steckerelement 23 zur Stromversorgung und Entgegennahme bzw. Ausgabe von Steuersignalen 24/25 der Sensorelemente 20 zur Weiterleitung an ein übergeordnetes Sensorsystem 200 bzw. an ein übergeordnetes Steuersystem 260. Die Sensorbaugruppe 100 weist zusätzliche Markierungen bzw. Vorrichtung 40 zur Fixierung an einer Vorrichtung auf, die als optische Markierungen (z.B. als Pfeil) oder als Formen (z.B. Halbkreise, Bohrungen) ausgeführt sind. Insbesondere die Bohrungen können dazu herangezogen werden, mit eine Schraube etc. später die Sensorbaugruppe 100 in einer bestimmten Position zu fixieren.

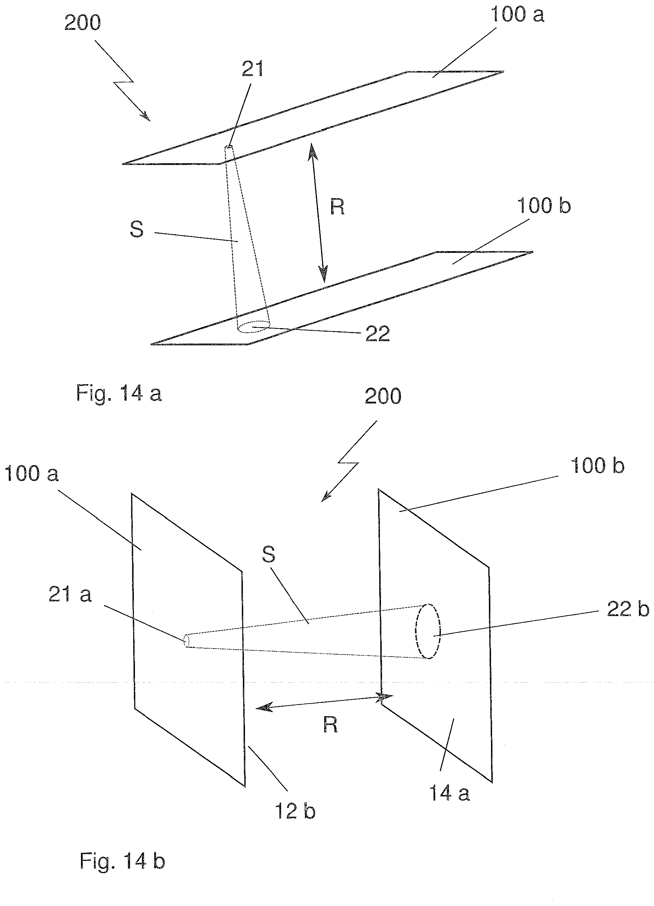

Fig. 14 zeigt schematisch die Anordnung ein Sensorsystem 200 bestehend aus einem Überwachungsraum R und zwei diesen Raum zumindest teilweise ein - oder umfassende Sensorbaugruppen 100a, 100b, wobei sich die Sensorbaugruppen zumindest teilweise einander gegenüber liegen. Die Sensorbaugruppen 100a, 100b bzw. die an diesen einander zugewandten Außenflächen befindliche Sensorelemente 20 sind dabei so angeordnet, dass zumindest ein Signalgeber 21 der ersten Sensorbaugruppe 100a einem Signalempfänger 22 einer zweiten Sensorbaugruppe 100b annähernd gegenüberliegt, so dass ein vom Signalgeber 21 ausgestrahlte Signal durch den Überwachungsraum R hindurch zum Signalempfänger 22 der zweiten Sensorbaugruppe 100 B gesendet und empfangen werden kann. Eine solche Anordnung kann beliebig im Raum gestaltet sein. Figur 14b zeigt hier zwei vertikal ausgerichtete Sensorbaugruppen 100a, 100b, wobei das Signal S hier horizontal durch ein Überwachungsraum R hindurch gesendet und empfangen wird.

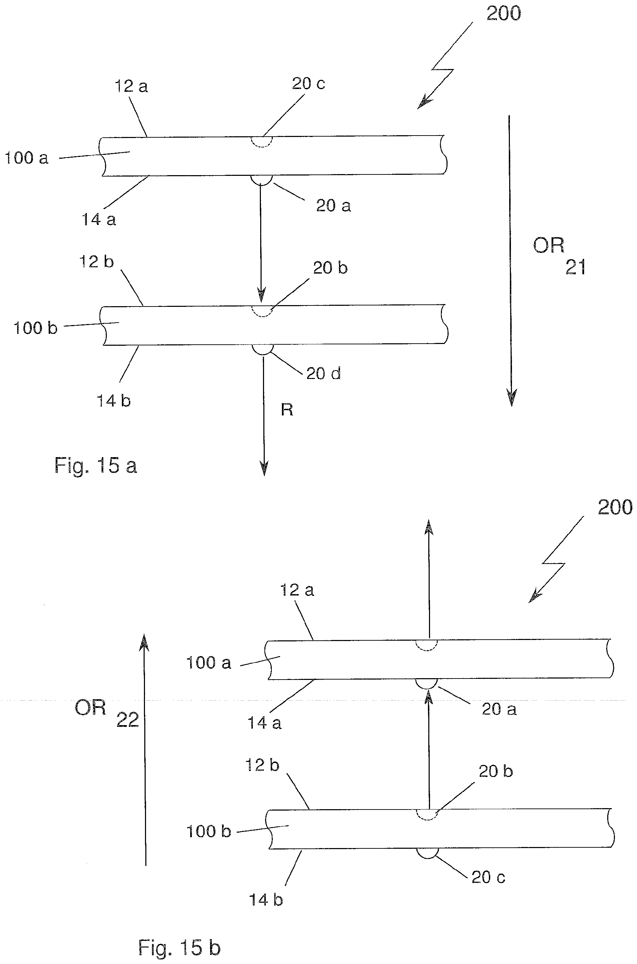

Fig. 15 zeigt eine Ausführung eines Sensorsystem 200 in einer Seitenansicht mit einer Anordnung von zwei Sensorbaugruppen 100a, 100b, wobei die Sensorbaugruppen derart gegenüber einander ausgerichtet sind das an den einander gegenüberliegenden Außenflächen 14a und 12b die Sensorelemente 20a und 20b miteinander agieren können, d.h. ein von einem Signalsensorelement 20a ausgesendet Signal kann von einem zweiten Sensorelement 20b empfangen werden.

Die Sensorelemente sind dabei derart zueinander positioniert und von ihrer Art her gewählt, so dass sich bei Sensorbaugruppen 100a, 100b an ihren einander zugewandten Außenflächen 14a und 12b immer jeweils ein Signalgeber 21 und ein Signalempfänger 22 gegenüberliegen. An den jeweils voneinander abgewandten Außenflächen der beiden Sensorbaugruppen 100a, 100b sind weitere Sensorelemente angeordnet, die jeweils komplementär zu demjenigen Sensorelement sind, welches auf der jeweiligen Sensorbaugruppe auf der der anderen Sensorbaugruppe zugewandten Außenfläche liegt. Komplementär heißt hier die jeweils andere Art eines Sensorelements. In Fig. 15a liegt die Sensorbaugruppe 100a mit ihrer Außenfläche 14a mit einem Signalgeber 20a der Außenfläche 12b der Sensorbaugruppe 100b mit einem Signalempfänger 20b gegenüber. Somit ist auf der der nicht der Sensorbaugruppe 100b gegenüberliegenden Außenfläche 12a das weitere Sensorelement 20 c als Signalempfänger ausgebildet. An der Sensorbaugruppe 100b ist auf der der von der Sensorbaugruppe 100a abgewandten Außenfläche 14b das weitere Sensorelement 20d als Signalempfänger ausgebildet. Entsprechend sind alle Sensorelemente verschiedener Sensorbaugruppen jeweils einer Art in jeweils eine Richtung OR orientiert, und zwar sind alle Signalgeber in eine erste Richtung OR 21 und alle Signalempfänger in eine zweite Richtung OR 22 orientiert (Fig. 15b).

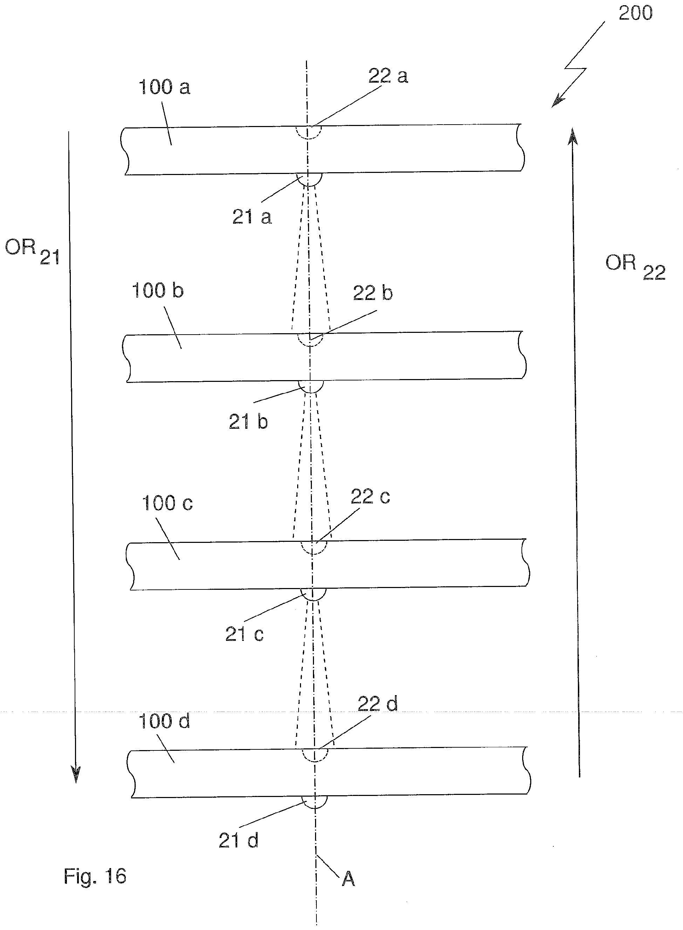

Fig. 16 zeigt ein Sensorsystem 200 in einer Seitenansicht mit vier übereinander angeordneten Sensorbaugruppen 100, bei der die jeweiligen Signalgeber 21 in eine erste Richtung OR 21 von oben nach unten und jeweils alle Signalempfänger 22 in eine zweite Richtung OR 22 von unten nach oben orientiert sind. Auf diese Art ist es möglich mehrere baugleiche Sensorbaugruppen in einem gesamten Sensorsystem effizient anzuordnen und miteinander kaskadierend zu kombinieren. Dabei liegen miteinander agierende Sensorelemente zumindest zweier benachbarter Sensorbaugruppen auf einer gemeinsamen Achse A.

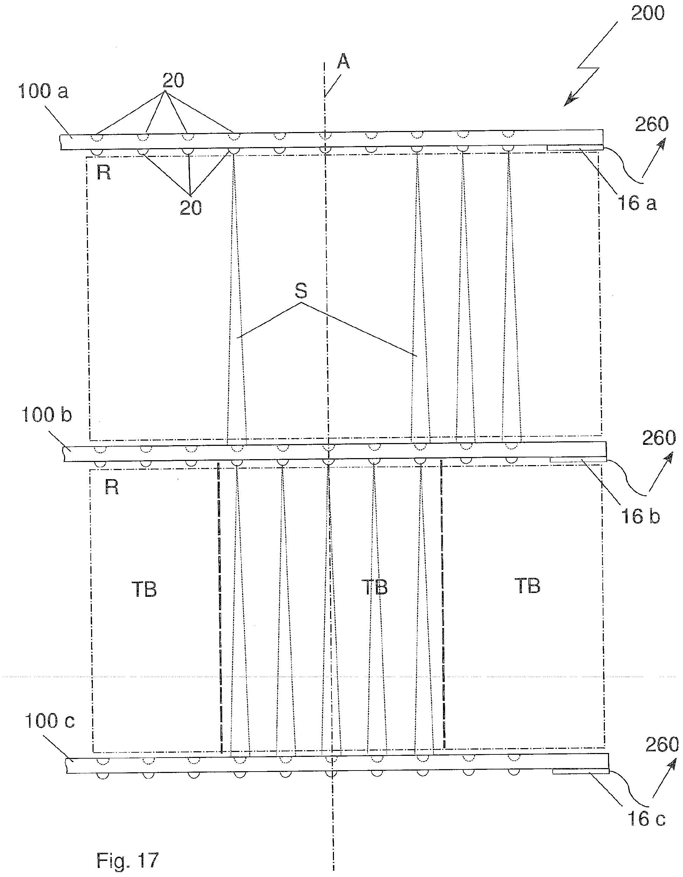

Figur 17 zeigt ein Vergleichsbeispiel eines Sensorsystems 200 mit drei jeweils übereinander angeordneten Sensorbaugruppen 100, die jeweils eine Vielzahl von Sensorelementen 20 aufweisen. Die Sensorelemente jeweils einer Art sind wieder ausschließlich in eine erste Richtung OR 21 und in eine zweite Richtung OR 22 orientiert. Die jeweils miteinander agierenden Sensorelemente unterschiedlicher Sensorbaugruppen liegen alle jeweils auf einer gemeinsamen Achse A. Zwischen jeweils zwei gegenüberliegenden Sensorbaugruppe 100 befindet sich jeweils eine Überwachungsraum R mit einer Vielzahl von zumindest paarweise zusammen agierenden Signalelementen unterschiedlicher Sensorbaugruppen. Die Überwachungsräume R können in kleinere Teilbereiche unterteilt werden, indem die Steuerelektronik 260 jeweils Gruppen definiert und diese Gruppen den entsprechenden Teilbereichen TB zuordnet.

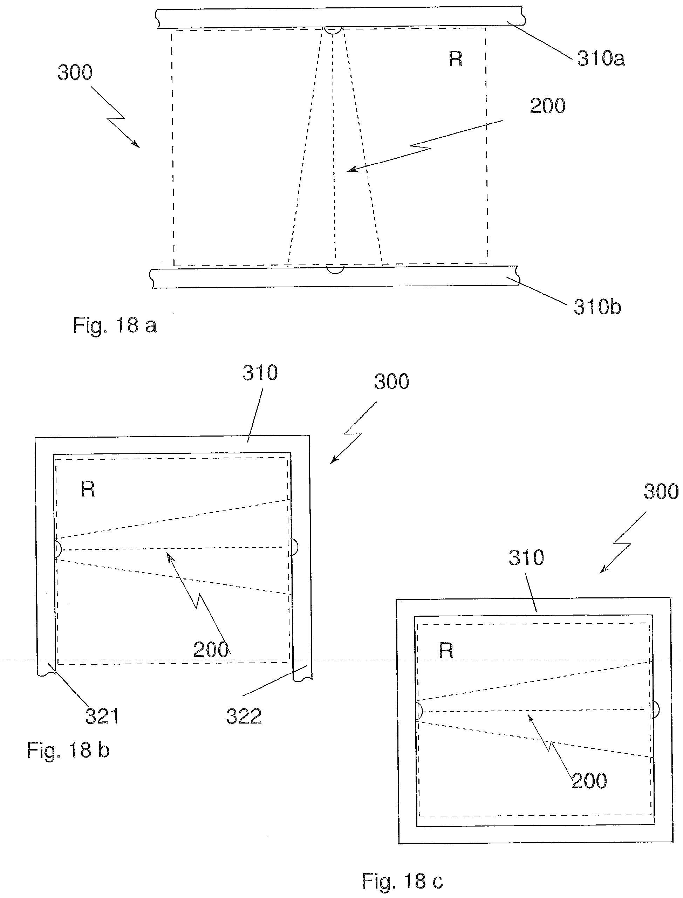

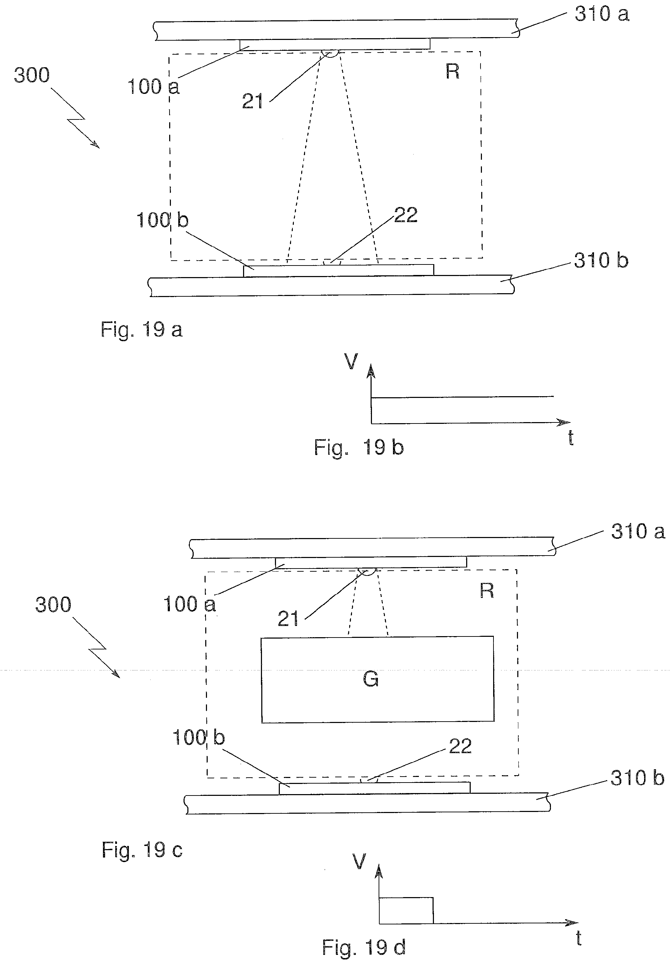

Figur 18 zeigt schematisch eine Lagervorrichtung 300 mit einem Sensorsystem 200. Dazu weist die Lagervorrichtung 300 einen Lagerraum R zur Aufnahme bzw. einer Abstellfläche für ein Lagergut G auf, welcher von einem Begrenzungselement 310 oder von Abschnitten 321 322 eines Begrenzungselements 310 oder von zwei verschiedenen Begrenzungselementen 310a, 310b zumindest teilweise ein- bzw. umfasst ist. In einer Ausführungsform ist dazu ein Sensorsystem 200 mit zwei unterschiedlichen Sensorbaugruppe 100a, 100b an zwei Begrenzungselementen 310a, 310b derart angeordnet dass zumindest ein Signalgeber 21 der ersten Sensorbaugruppe 100a mit zumindest einem Signalempfänger 22 der zweiten Sensorbaugruppe 100b agieren kann wobei ein vom Signalgeber 21 gesendet Signal S durch den Überwachungsraum R zum Signalempfänger 22 gesendet wird (Fig. 19a). Versperrt kein Lagergut G den Weg des Signals S, so empfängt der Signalempfänger 22 das vom Signalgeber 21 ausgesendete Signal S und interpretiert das als einen ersten Belegungszustand BZ1, nämlich dass kein Lagergut G im Überwachungsraum R enthalten ist (Figur 19b).

Ist jedoch im Überwachungsraum R ein Lagergut G enthalten, so ist der Signalweg S gestört und ein von einem Signalgeber 21 ausgesendeten Signal S kann vom Signalempfänger 22 nicht empfangen werden, was als zweiter Belegzustand BZ 2 interpretiert wird, nämlich dass ein Lagergut G im Überwachungsraum R vorhanden ist (Figur 19d).

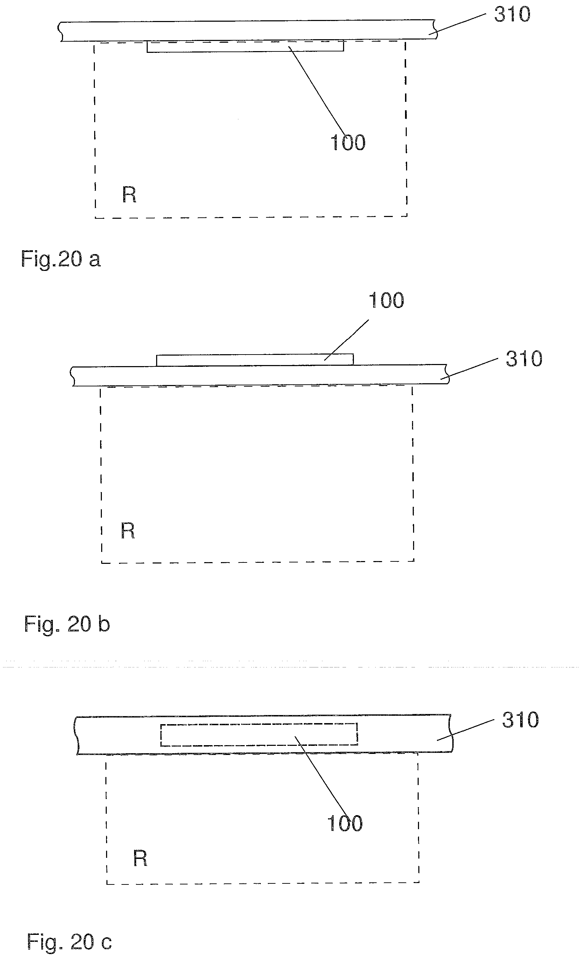

Figur 20 zeigt verschiedene Möglichkeiten der Anordnung einer Sensorbaugruppe 100 an einem Begrenzungselement 310. Eine Sensorbaugruppe 100 kann entweder an einer zum Überwachungsraum R zugewandten Außenfläche eines Begrenzungselements 310 angeordnet sein (Fig. 20a). Eine zweite Möglichkeit ist, die Sensorbaugruppe 100 an einer vom Überwachungsraum R abgewandten Außenfläche eines Begrenzungselements 310 anzuordnen (Figur 20b). Eine weitere Möglichkeit ist eine Sensorbaugruppe 100 zumindest teilweise in ein Begrenzungselement 310 in einer entsprechenden Aussparung 318 zu integrieren (Figur 20c).

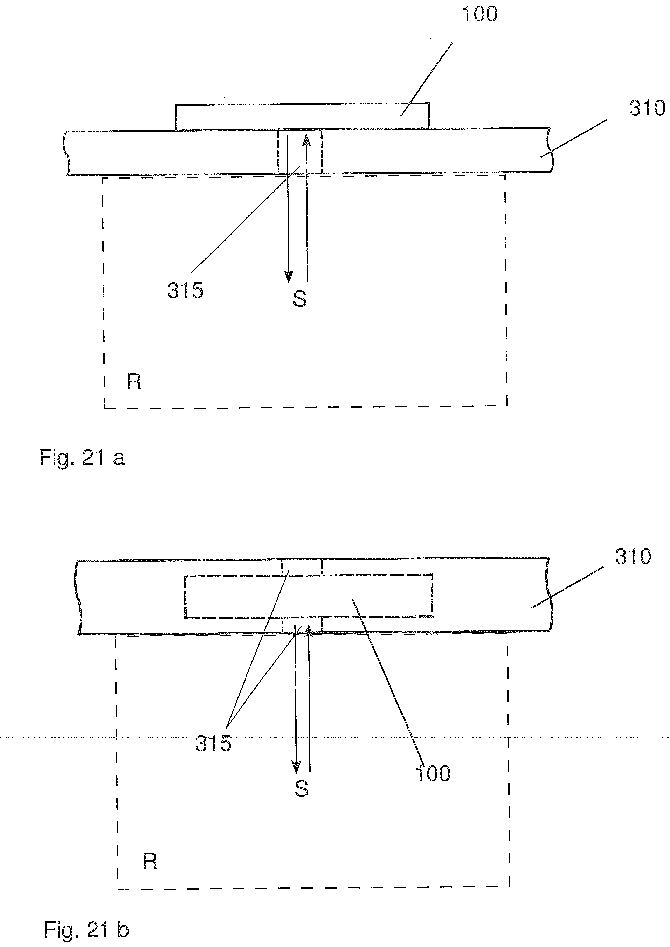

In einer Ausführungsform für die Anordnung einer Sensorbaugruppe nach den Figuren 20b und 20c, wonach die Sensorbaugruppe und daran angeordnete Sensorelemente keinen Zugang zum Überwachungsraum R hätten und so keine Signale S senden oder empfangen könnten, wird in das Begrenzungselement 310 eine Öffnung als Signalöffnung 315 für die Durchleitung von Signalen der Sensorelemente eingebracht. Diese Signalöffnung 315 kann in das Begrenzungselement 310 entweder gestanzt oder gebohrt werden und ermöglicht einem Sensorelement 20 eine Interaktion mit einem komplementären Sensorelement durch den Überwachungsraum R hinweg. Fig. 21a zeigt eine an einer vom Überwachungsraum R abgewandten Rückseite eines Begrenzungselements 310 angeordnete Sensorbaugruppe mit einer Signalöffnung 315 durch die gesamte Stärke des Begrenzungselements 310. Bei einer integrierten Sensorbaugruppe 100 ist zumindest an einer Seite zumindest eine Signalöffnung 315 oder zu beiden Seiten zumindest zwei Signalöffnungen 315 an den entsprechenden Stellen der Sensorelemente angebracht (Fig. 21b).

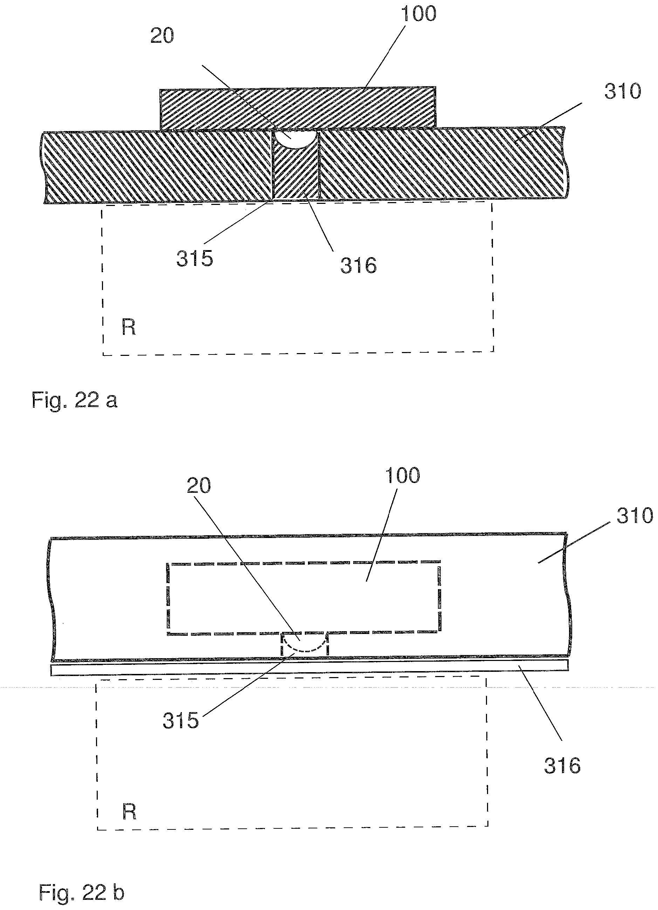

Das Sensorelement 20 kann an der Oberfläche der Sensorbaugruppe 100 vorstehen und kann damit zumindest teilweise eine solche Signalöffnung 315 ausfüllen. Dabei wird die Sensorbaugruppe in Bezug auf das Begrenzungselement positioniert und zumindest ansatzweise fixiert, so dass das zumindest ein Sensorelement 20 sicher mit der Signalöffnung 315 in Deckung kommt. In einer weiteren Ausführungsform ist die Signalöffnung 315 mit einem für die von den Sensorelementen verwendete Signalart durchlässiges Material zumindest teilweise aufgefüllt, z.B. mit einem transparenten Kunstharz. So ist eine glatte Oberfläche vorhanden und es kann sich in die Signalöffnungen kein Schmutz festsetzen, der die Signale stören würde (Fig. 22a).

Alternativ oder zusätzlich kann auch eine weitere Schutzschicht 316 aufgebracht werden, z.B. eine Folie oder ein Klebeband aus einem transparenten Material (Fig. 22b).

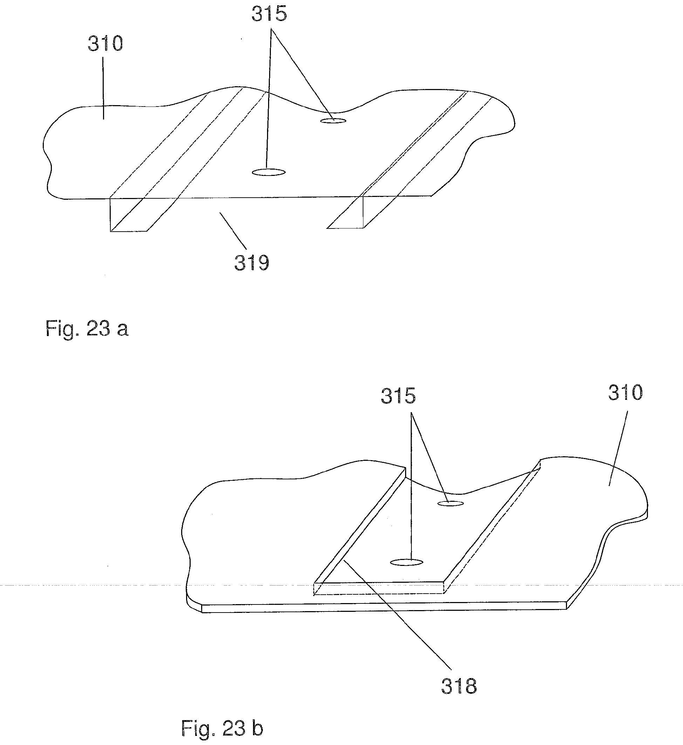

Zur Anordnung einer Sensorbaugruppe 100 ist in einer Ausführungsform der Erfindung eine Vorrichtung 319 (Fig. 23a) oder ein Aufnahmeraum 318 (Fig. 23b) an einem Begrenzungselement 310 angeordnet. Fig. 23a zeigt eine Vorrichtung mit einer Öffnung 319, in die sich eine Sensorbaugruppe 100 schieben lässt und von der Vorrichtung hintergriffen wird, so dass die Sensorbaugruppe an einer Außenfläche sicher gehalten ist. In dem Begrenzungselement 310 sind zum Überwachungsraum R entsprechende Signalöffnung 315 eingebracht, damit die Sensorelemente 20 einer Sensorbaugruppe 100 Signale senden oder empfangen können.

Fig. 23b zeigt eine zur Aufnahme einer Sensorbaugruppe 100 bestimmte Ausnehmung in Form einer von oben zugänglichen Vertiefung 318. Darin wird in einer weiteren Ausführungsform bündig abschließend eine Sensorbaugruppe 100 eingelegt. In der Vertiefung sind sich nach unten öffnende Signalöffnungen 315 eingebracht.

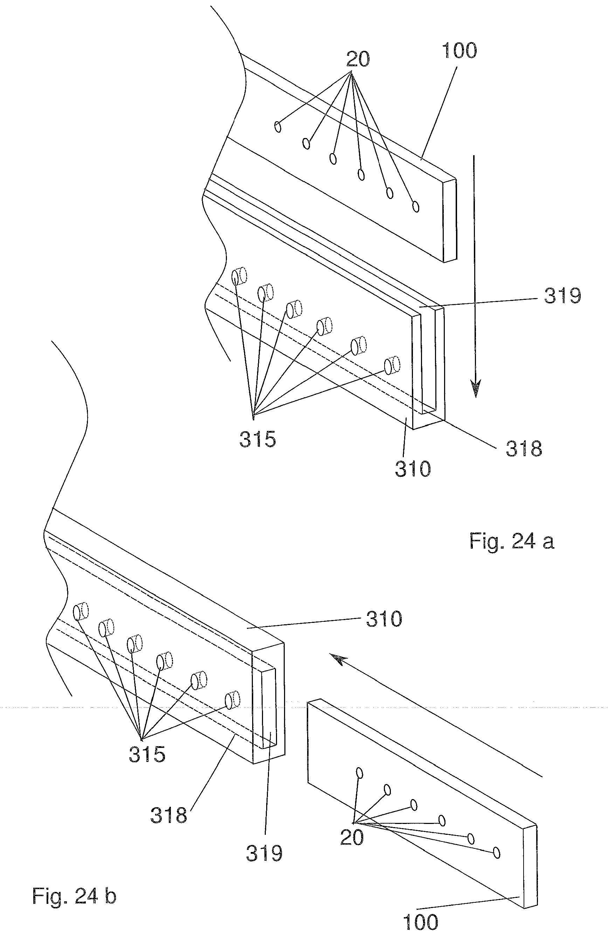

Fig. 24a zeigt ein Begrenzungselement 310 mit einer nach oben geöffneten Ausnehmung 318, in die von oben 319 eine Sensorbaugruppe 100 eingebracht ist. Fig. 20b zeigt ein Begrenzungselement 310 mit einer zur Seite geöffneten Ausnehmung, in die seitlich eine Sensorbaugruppe einschiebbar ist.

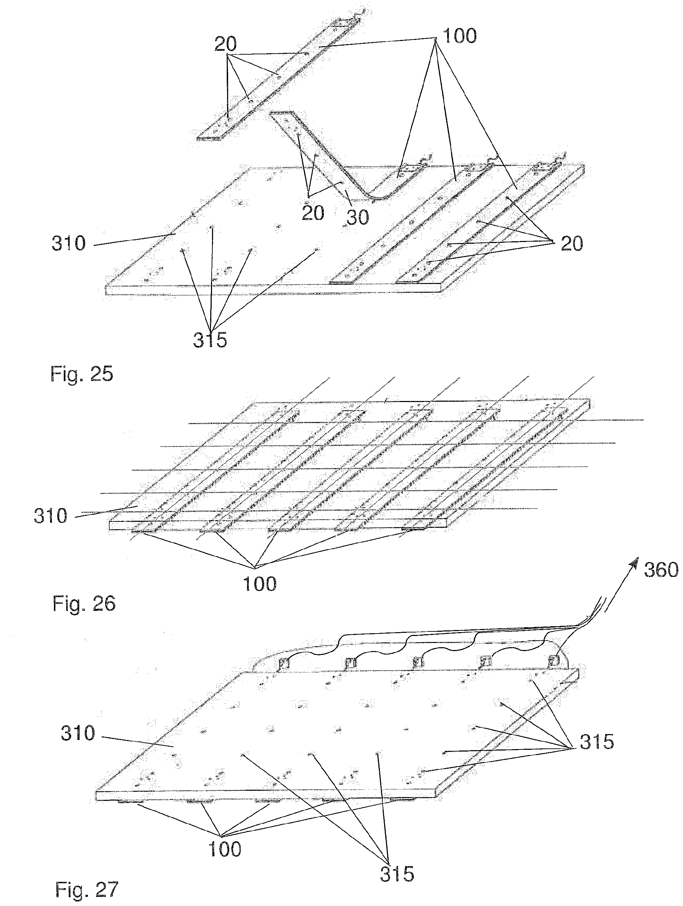

Figur 25 zeigt ein Vergleichsbeispiel eines plattenförmigen Begrenzungselements 310 mit einer obenliegender Auflageseite für Lagergüter G und entsprechend einem in Bezug zur Schwerkraft F oben liegendem Überwachungsraum R, an dessen Unterseite mehrere Sensorbaugruppen 100 parallel zueinander angeordnet sind. Die Sensorbaugruppen 100 werden entsprechend der auf den Außenflächen angeordneten Sensorelementen 20 am Begrenzungselement 310 so ausgerichtet, dass die Sensorelemente 20 mit den entsprechenden Signalöffnungen 315 zur Deckung kommen. Die flexiblen Sensorbaugruppen 100 werden anschließend mit der an einer Seite vorhandenen Klebeschicht an der Außenfläche des Begrenzungselements 310 fixiert.

Jede Sensorbaugruppe 100 verfügt über eine Vielzahl von Sensorelementen 20, die jeweils in einer Reihe an der jeweiligen Sensorbaugruppe 100 angeordnet sind. Da am Begrenzungselement 310 mehrere Sensorbaugruppen 100 jeweils parallel zueinander angeordnet sind, ergibt sich eine Sensormatrix (Fig. 26), die jeweils mit einer Steuerelektronik 360 gezielt auch in Teilbereichen angesteuert und oder ausgewertet werden kann (Fig. 27).

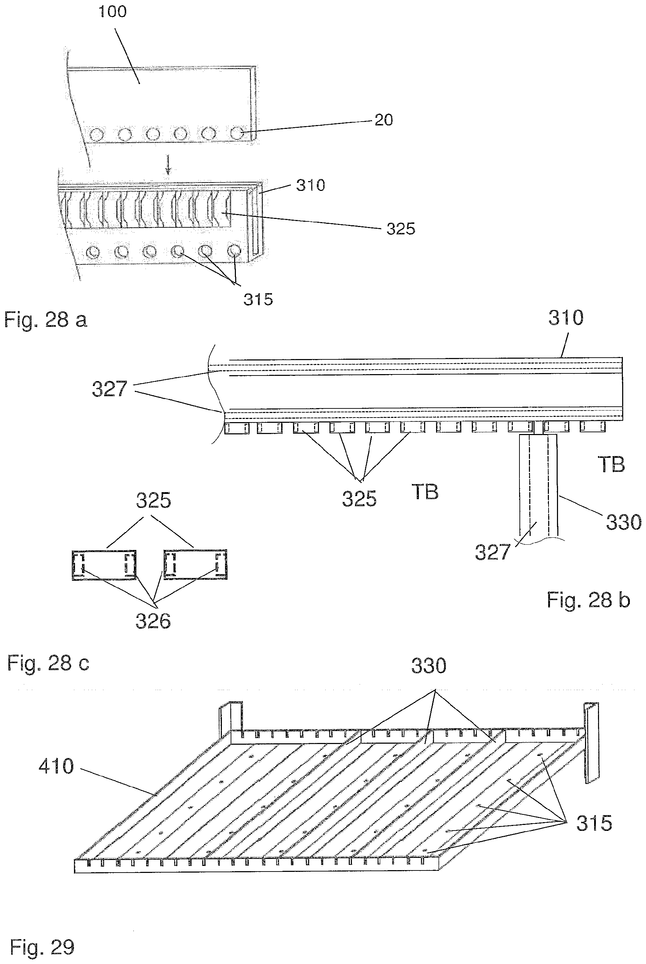

In einer Ausführung haben die einen Überwachungsraum ein- oder umfassende Begrenzungselemente 310 Vorrichtungen 325 (Fig. 28a) zur Aufnahme von weiteren Begrenzungselementen 310 bzw. von Trennelementen 330 zur Einrichtung von Teilbereichen TB, die im Folgenden auch als Kompartimente bezeichnet werden, innerhalb eines Überwachungsraums R (Fig. 28b). Die weiteren Begrenzungselemente 310 oder Trennelemente 330 werden dazu von oben in die Vorrichtungen 325 eingeschoben, so dass eine annähernd rechtwinklige Ecke entsteht und in Verbindung mit dem gleichen Prozedere am anderen Ende des eingeschobenen Begrenzungselemente 310 oder Trennelemente 330 insgesamt ein abgetrennter Teilbereich TB. In einer Ausführungsform beinhalten die Vorrichtungen 325 seitlich Kontaktflächen 326 (Fig. 28c), so dass dort eingeschobene Begrenzungselemente 310 und die darin enthaltenen Sensorbaugruppen 100 elektrisch mit dem Sensorsystem 200 bzw. der Lagervorrichtung 300 verbunden sind. Weiter enthalten die Begrenzungselemente 310 oder Trennelemente 330 Strom- und Datenleitungen 327, um eingeschobene Elemente in die Energieversorgung und Datenleitungen der Schublade 523 einzubinden.

Figur 29 zeigt perspektivisch einen Regalboden 410 mit an der Unterseite angeordneten Sensorbaugruppen und durch die Auflagefläche für Lagergüter G durchgeführten Signalöffnungen 315. Zusätzlich ist der Regalboden durch parallel zu den Sensorbaugruppen verlaufende Trennelemente 330 in mehrere Regalfächer unterteilt. Ein um den Regalboden allseitig umlaufender Rahmen verhindert ein seitliches Herunterfallen eingelagerter Lagergüter G.

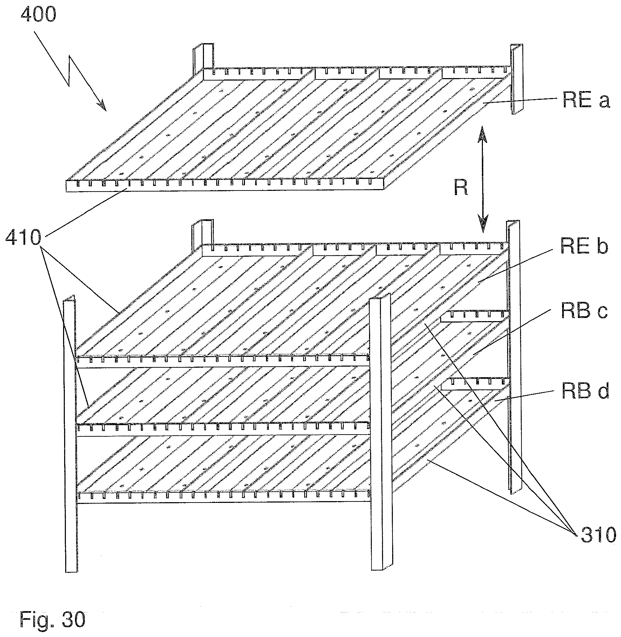

Figur 30 zeigt eine als Regal 400 ausgebildete Lagervorrichtung 300 mit einem ersten Regalboden 410 zur Aufnahme von Lagergütern sowie weiterer Regalböden 410, wobei aufgrund der räumlichen Anordnung zueinander, jeweils zwischen zwei Regalböden 410 ein Überwachungsraum R definiert ist, an dessen jeweils oberhalb befindlichem Regalboden 410 an dessen Unterseite eine Vielzahl von Sensorbaugruppen 100 angeordnet sind.

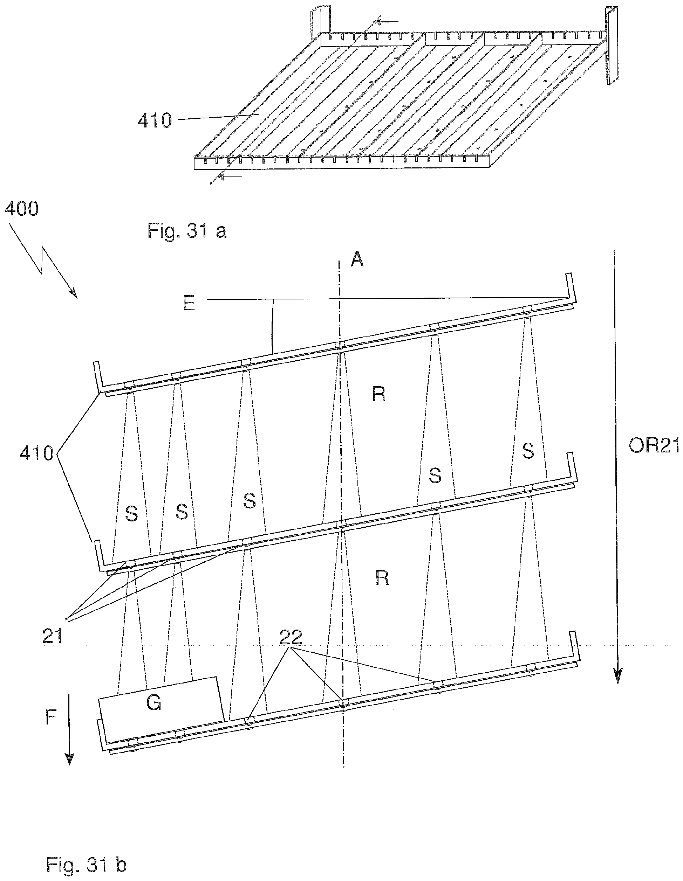

Figur 31 zeigt einen Schnitt durch ein Regal 400 mit insgesamt drei Regalböden und zwei Überwachungsräumen R. Der Schnitt geht durch eine Sensorbaugruppe 100 auf Höhe der auf einer Linie angeordneten Sensorelementen 20. Jeweils an der Unterseite eines Regalbodens ist eine Sensorbaugruppe angeordnet, wobei die Signalgeber 21 von oben nach unten und die Signalempfänger 22 von unten nach oben orientiert sind. Die Regalböden weisen an einer Seite ein Gefälle auf, welches dafür sorgt, dass die Lücke eines entnommenen Lagerguts G, z.B. ein Paket mit Schrauben durch nachrutschende Pakete geschlossen wird und immer ein Paket vorne am Entnahmepunkt bereitsteht, solange noch Pakete im entsprechenden Warenfach sind. Im Lagerfach vorhandene Pakete verhindern den Empfang der von den oberhalb der Pakete angeordneten Signalgeber 21 ausgesendeten Signale S durch die von den Paketen verdeckten Signalempfängern 22, so dass ein gesendetes aber nicht empfangendes Signal S als ein erster Belegungszustand als "vorhanden" interpretiert wird. Dort, wo kein Paket mehr vorhanden ist kann ein Signal S empfangen werden, was als zweiter Belegungszustand und als "leer" interpretiert wird. Die einzelnen Belegzustände werden entweder periodisch oder aufgrund eines Ereignisses, z.B. einer manuellen Anfrage, abgefragt und an ein übergeordnetes Verwaltungssystem weitergemeldet, welches aufgrund des Lagerplatzes bzw. der Zuordnung eines Überwachungsraums bzw. seiner Teilbereiche TB zu bestimmten Waren eine Bestandsfortschreibung durchführt und ggfs. Bestellvorgänge auslöst.

Ist die Länge der einzelnen Artikel bzw. die Anzahl Artikel pro Längeneinheit bekannt, kann beispielsweise auch die Anzahl der Artikel im jeweiligen Teilbereich TB ermittelt werden. Beispielsweise kann die Länge der einzelnen Artikel bereits bekannt sein oder diese wird während der Einrichtung des Regals 400 ermittelt und gespeichert. Beispielsweise kann die Position des letzten Sensorelements mit dem Belegzustand "vorhanden" bzw. die Position des ersten Sensorelements mit dem Belegzustand "leer" detektiert werden. Anschließend kann manuell die Anzahl der Artikel eingegeben werden. Mit diesen Informationen ist, in Abhängigkeit vom Abstand der einzelnen Sensorelemente eine Größenberechnung der einzelnen Artikel und somit eine genauere Bestimmung der Anzahl der Artikel im Teilbereich bei Entnahme einzelner Artikel möglich.

Alternativ kann die Position des letzten Sensorelements mit dem Belegzustand "vorhanden" bzw. die Position des ersten Sensorelements mit dem Belegzustand "leer" gespeichert werden. Um zu prüfen, ob eine Mindestmenge des jeweiligen Artikels vorhanden ist, kann es ausreichen, nur das dieser Position zugeordnete Sensorelement abzufragen. Der Zeitaufwand für eine Abfrage kann so deutlich reduziert werden. Beispielsweise kann bei der Einrichtung des Regalsystem dieses mit der Mindestmenge befüllt werden und die Position des letzten Sensors detektiert werden, der eine Belegung anzeigt, bzw. die Position des ersten Sensorelements, das keine Belegung anzeigt.

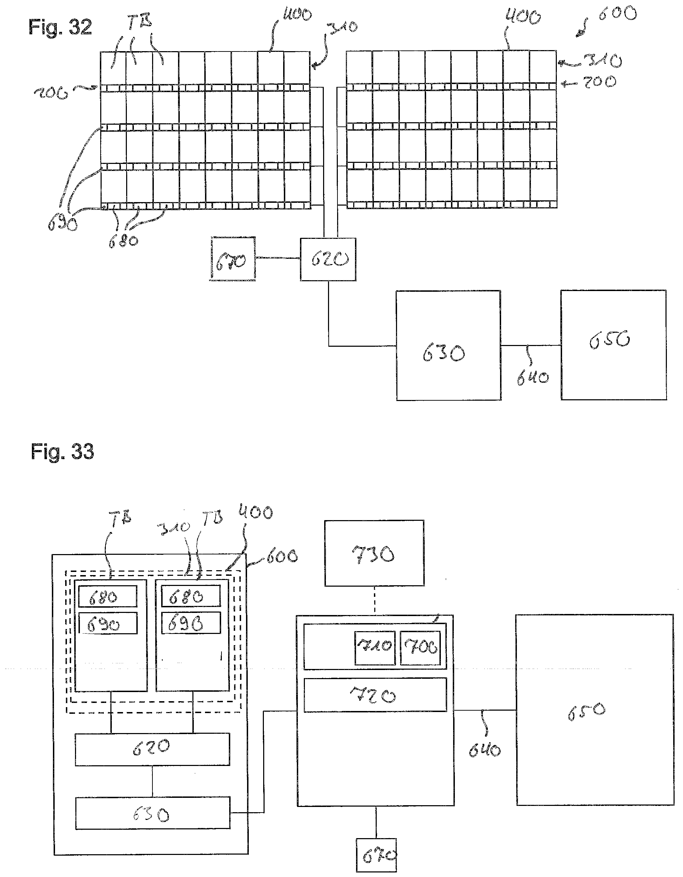

Die Figuren 32 und 33 zeigen ein Lagersystem 600 mit mehreren, beispielsweise in Figur 31 dargestellten Regalen 400. Jedes Regal 400 hat mehrere Regalböden 310, die jeweils in mehrere Teilbereiche bzw. Kompartimente TB unterteilt sind. Bei den Regalen 400 kann es sich beispielsweise um Schrägbodenregale handeln, bei denen die Regalböden 310, wie in den Figuren 31a und 31b beschrieben, in einer Befüllungsrichtung bzw. einer Entnahmerichtung geneigt sind. Die Kompartimente TB verlaufen jeweils in Entnahmerichtung, so dass die auf den Regalböden 310 angeordneten Artikel jeweils an das vordere, tiefere Ende der Regalböden 310 gleiten.

Das Lagersystem 600 weist des Weiteren ein Sensorsystem 200 auf, das aus mehreren Sensorbaugruppen 100 besteht, wobei jedem Kompartiment TB eine Sensorbaugruppe 100 zugeordnet ist. Die Sensorbaugruppen 100 sind jeweils zum Abtasten der Belegung der Kompartimente TB und zur Erzeugung einer Beleginformation ausgebildet. Den Kompartimenten TB ist jeweils eine eindeutige Adresse zugeordnet, die auf einem Barcode 680 auf der Vorderseite des Kompartiments abgebildet ist.

Des Weiteren ist ein Datenbus 620 vorgesehen, der mit einer Kommunikationseinrichtung 630 verbunden ist, die eine Netzwerkverbindung 640 mit einem Server 650 aufbauen kann. Die Kommunikationseinrichtung 630 kann die über den Datenbus empfangenen Beleginformationen sowie die den Beleginformationen zugeordnete Adresse der Kompartimente TB über die Netzwerkverbindung 640 an den Server 650 senden. Des Weiteren kann die Kommunikationseinrichtung 630 über die Netzwerkverbindung 640 Steuerungsinformationen des Servers 650 empfangen. Beispielsweise sind die Steuerungsinformationen Anweisungen zum Durchführen einer Inventur oder Informationen zur Durchführung einer Fernwartung.

Das Lagersystem weist des Weiteren einen Handscanner 670 zur optischen Erfassung eines optisch lesbaren Codes, wobei jedes der Kompartimente TB einen die jeweiligen Adresse angebenden, optisch lesbaren Code trägt. Die Kommunikationseinrichtung ist so konfiguriert, dass die Zuordnung eines Gütertyps zu einem oder mehreren der Kompartimente TB dadurch erfolgt, dass die Kommunikationseinrichtung 630 von dem Handscanner 670 eine optisch erfasste Adresse und einen der optisch erfassten Adresse zugeordneten Gütertyp empfängt.

Der Handscanner kann kabellos ausgebildet sein und eine drahtlose Kommunikationsschnittstelle zur Kommunikation mit der Kommunikationseinrichtung aufweisen.

Die Kompartimente weisen des Weiteren Signalisierungsmittel 690 auf, die beispielsweise nach Empfang des Fehlbelegungssignals ein optisches Signal ausgeben, dass eine Fehlbelegung für einen Nutzer optisch anzeigt.

Zur Einrichtung des Lagersystems 600 wird zunächst die Kommunikationseinrichtung 630 in einen Einrichtungsmodus geschaltet. Anschließend erfolgen eine Belegung der Kompartimente TB des Lagersystems 600 nach einem vorgegebenen Belegplan 700 mit Mindest-Bestandsmengen, unterhalb deren Nachbestellungen ausgelöst werden sollen, sowie eine Erfassung der Mindest-Bestandsmengen mit dem Sensorsystem 200 und eine Speicherung der Mindest-Bestandsmengen in der Kommunikationseinrichtung. Abschließend erfolgt eine Vervollständigung der Belegung auf den Sollbestand im Lagersystem 100.

Der Betrieb des Lagersystems 600 nach der Einrichtung erfolgt mit folgenden Schritten:
- Erfassung der Belegungsinformation 710 zumindest eines der Kompartimente TB,
- Vergleich der erfassten Belegungsinformation 710 mit einem gespeicherten Belegplan durch die Kommunikationseinrichtung 630,
- sofern durch die Kommunikationseinrichtung 630 eine Diskrepanz zwischen der erfassten Belegungsinformation und dem Belegplan detektiert wird, Erzeugung eines Fehlbelegungssignals durch die Kommunikationseinrichtung 630 und Senden des Fehlbelegungssignals über den Datenbus an die Adresse derjenigen Sensorbaugruppe 100, von der die Belegungsinformation erfasst worden ist.

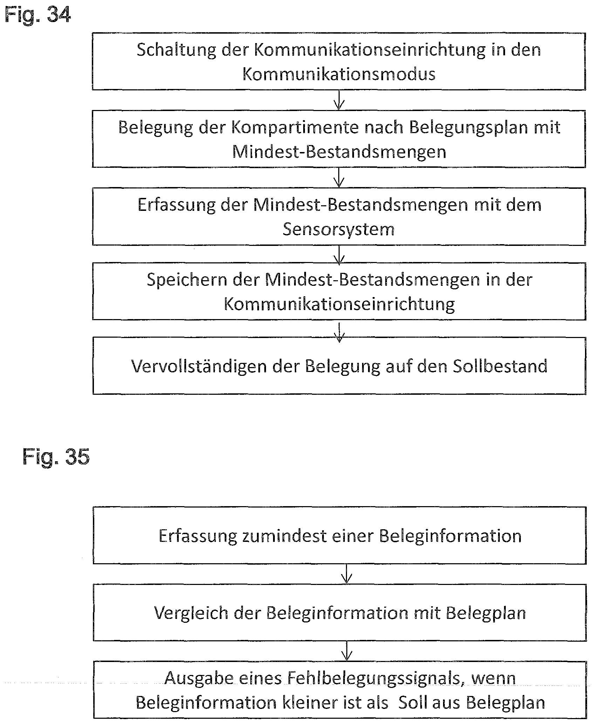

Der Ablauf der Einrichtung sowie des Betriebes des Lagersystems 600 ist in den Figuren 33 und 34 nochmals schematisch dargestellt.

Das Lagersystem 100 kann die Belegungserkennung permanent oder periodisch durchführen, beispielsweise, um jeweils einen aktuellen Warenbestand zu protokollieren, indem die Beleginformationen in der Kommunikationseinrichtung 630 gespeichert werden. Alternativ kann die Belegungserkennung nur zu festgelegten Zeitpunkten oder nach Aufforderung erfolgen. Beispielsweise ist ein Inventurzeitpunkt festgelegt, zu dem das Lagersystem eine automatische Inventur, also eine Belegungserkennung aller Kompartimente TB, durchführt.

Auf der Kommunikationseinrichtung 630 ist ein Fernwartungsprogramm-Modul 720 installiert, welches über das Netzwerk ansprechbar ist und direkt Wartungsvorgänge auf dem Lagersystem durchführen kann. Das Fernwartungsprogrammmodul ist beispielsweise so konfiguriert, dass aufgrund des Empfangs eines Kommandos über das Netzwerk das Sensorsystem 200 so angesteuert wird, dass die Belegungsinformation von einem in dem Kommando durch die Angabe einer entsprechenden Adresse spezifizierten Kompartiment TB erfasst wird und aufgrund der Belegungsinformation ein Belegungsinformationssignal generiert wird, welches über das Netzwerk gesendet wird.

Die Kommunikationseinrichtung 630 ist zum Anschluss eines Computers 730 über eine lokale Verbindung ausgebildet, um einen in der Kommunikationseinrichtung 630 gespeicherten Belegplan 700 auf einer Nutzerschnittstelle des Computers zu visualisieren.

Die Kommunikationseinrichtung 630 hat des Weiteren einen Einrichtungsmodus, wobei eine mittels des Sensorsystems 200 im Einrichtungsmodus erfasste Belegung des Lagersystems 600 als Belegplan gespeichert werden kann, wobei der Belegplan insbesondere den einem jeden Kompartiment TB zugeordneten Gütertyp und einen diesem Gütertyp zugeordneten Belegungs-Schwellwert beinhaltet, der durch das Sensorsystem 200 erfasste Belegung gegeben ist.

Die Regalböden 310 können in Befüllungsrichtung der Kompartimente TB, insbesondere in Richtung des Gefälles, mehrere Ausnehmungen aufweisen, um einen Signalempfang und/oder eine Signalabgabe durch das Sensorsystem 200 zu ermöglichen, wobei die Sensorbaugruppen 100 des Sensorsystems 200 unterhalb der Regalböden 310 angeordnet sind, und mit einer in Befüllungsrichtung auf einer Oberseite des Regalbodens 310 aufgebrachten Folie, welche die Ausnehmungen überdeckt.

Bei der Folie handelt es sich beispielsweise um eine Kunststofffolie, insbesondere eine PVC-Folie, wobei die Kunststofffolie insbesondere im Bereich einer Frequenz des Signalempfangs und/oder der Signalabgabe transparent ist.

Im Folgenden werden weitere Merkmale möglicher Ausführungsformen beschrieben, wobei die Merkmale untereinander und mit den vorstehend benannten Merkmalen kombinierbar sind.

Die Sensorbaugruppe (100) für eine Belegerkennung weist beispielsweise ein Trägerelement (10) mit mindestens zwei Sensorelementen (20) auf, wobei die Sensorelemente (20) an unterschiedlichen Außenflächen (11), (12), (13), (14) des Trägerelements (10) angeordnet sind.

Das Trägerelement (10) hat beispielsweise einen eckigen, bevorzugt einen dreieckigen oder einen viereckigen insbesondere einen quadratischen oder rechteckigen Querschnitt.

Das Trägerelement (10) ist beispielsweise eckig, kreisförmig, kreuzförmig, y-förmig, streifenförmig, gitterförmig, mäanderförmig und/oder sternförmig ausgebildet.

Das Trägerelement (10) ist beispielsweise starr, flexibel oder semiflexibel ist oder weist zumindest zwei starre, flexible oder semiflexible Abschnitte (10)(a) (10)(b) auf, die miteinander verbunden sind.

Das Trägerelement (10) ist beispielsweise aus einer Folie oder aus mehreren Schichten aus gleichen oder unterschiedlichen Folien und/oder Materialien aufgebaut ist.

Das Trägerelement (10) ist beispielsweise zumindest teilweise als Leiterplatte mit Leiterbahnen (15) ausgebildet oder weist zumindest elektrische Leiterstrukturen zur elektrischen Kontaktierung und/oder Weiterleitung der Signale der Sensorelemente (20) und/oder weiterer elektrischer und/oder elektronischer Bauteile (23) und/oder zum Anschluss an einen Datenbus (24) und/oder an eine Stromversorgung (25) und/oder zur Verbindung an zumindest eine weitere Sensorbaugruppe (100) auf.

Ein Sensorelement (20) ist beispielsweise jeweils als ein Signalgeber (21) oder als ein Signalempfänger (22) ausgebildet.

Bei dem Signalempfänger (22) ist beispielsweise ein Prüfsignalgeber (26) derart beigeordnet, dass der Signalempfänger (22) Signale des beigeordneten Prüfsignalgebers (26) direkt oder indirekt detektieren kann.

Das zumindest erste Sensorelement (20) (a) einer ersten Außenfläche (11), (12) der Sensorbaugruppe (100) ist beispielsweise zu dem zumindest zweiten Sensorelement (20) (b) einer zweiten Außenfläche (13), (14) der Sensorbaugruppe (100) komplementär ausgebildet, insbesondere ist beispielsweise dass das erste Sensorelement (20) (a) als Signalgeber (21) und das zweite Sensorelement (20) (b) als Signalempfänger (22) oder dass das erste Sensorelement (20) (a) als Signalempfänger (22) und das zweite Sensorelement (20) (b) als Signalgeber (21) ausgebildet.

Die zumindest zwei Sensorelemente (20) (a), (20) (b) sind beispielsweise zueinander komplementär ausgebildet sind und an jeweils einander entgegengesetzten Außenflächen (11), (13) oder (12), (14) des Trägerelements (10) angeordnet, insbesondere ist beispielsweise ein erstes Sensorelement (20) (a) an einer ersten Außenfläche (11), (12) als Signalgeber (21) und das zweite Sensorelement (20) (b) an einer zweiten, zur ersten entgegengesetzten Außenfläche (13), (14) als Signalempfänger (22) oder ein erstes Sensorelement (20) (a) an einer ersten Außenfläche (11), (12) als Signalempfänger (22) und das zweite Sensorelement (20) (b) an einer zweiten, zur ersten entgegengesetzten Außenfläche (13), (14) als Signalgeber (21) ausgebildet.

Die Sensorelemente (20) sind beispielsweise auf oder in einer Außenfläche (11), (12), (13), (14) des Trägerelements (10) zumindest teilweise integriert angeordnet.

Das von zumindest einem Signalgeber (21) emittierte und das von zumindest einem Signalempfänger (22) empfangene Signal ist beispielsweisen ein magnetisches, ein elektromagnetisches oder ein akustisches Signal.

Der Signalgeber (21) weist beispielsweise zumindest eine LED, eine OLED oder einen Piezokristall auf oder ist aus einem Array dieser Elemente gebildet.

Von zumindest einem Signalgeber (21) wird beispielsweise IR-Licht emittiert.

Zumindest ein Sensorelement (20) und/oder eine Leiterbahn ist beispielsweise (15) gedruckt.

Am Träger (10) ist beispielsweise eine Steuerelektronik (16) angeordnet, wobei die Steuerelektronik die Sensorbaugruppe gegenüber anderen Sensorbaugruppen eindeutig identifiziert.

Die Steuerelektronik (16) aktiviert beispielsweise die Sensorelemente (20) und registriert, weiterverarbeitet und weiterleitet die Datensignale der Sensorelemente (20).

Das von der Steuerelektronik (16) erzeugte und vom Signalgeber (21) emittierte Signal ist beispielsweise in seiner Frequenz und/oder seiner Intensität variierbar.

Das emittierte Signal (S) ist beispielsweise derart getaktet, dass das Signal (S) kodiert ist.

Ein Betriebszustand ist beispielsweise bei den vorhandenen Sensorelementen (20) durch die Steuerelektronik (16) einzeln, gruppenweise oder alle auf einmal aktivierbar oder abfragbar, insbesondere gibt ein Signalgeber ein Signal ab oder ein Signalempfänger wird abgefragt, ob er ein Signal empfängt.

Das Trägerelement (10) weist beispielsweise an zumindest einer Außenfläche mehr als zwei, bevorzugt eine Vielzahl von Sensorelementen (20) auf, die zueinander definiert angeordnet, bevorzugt auf zumindest einer Linie oder in zumindest einer Reihe angeordnet sind.

Beispielsweise sind Sensorelemente (20) für unterschiedliche Signalarten gemeinsam an einer Außenfläche (11), (12), (13), (14) des Trägerelements (10) gruppiert und/oder alternierend angeordnet.

Auf einer Außenfläche (11), (12), (13), (14) sind beispielsweise jeweils nur Sensorelemente einer Art angeordnet, insbesondere sind beispielsweise an einer Außenfläche (11), (12), (13), (14) angeordneten Sensorelemente (20) jeweils nur als Signalgeber (21) oder jeweils nur als Signalempfänger (22) ausgebildet.

Signalgeber (21) und Signalempfänger (22) sind beispielsweise gemeinsam an einer Außenfläche (11), (12), (13), (14) des Trägerelements (10) gruppiert und/oder alternierend angeordnet.

Beispielsweise ist eine Markierung (40) zur späteren Positionierung und/oder Ausrichtung der Sensorbaugruppe (100) vorhanden.

Beispielsweise ist eine Fixiervorrichtung (40) zur späteren Positionierung und/oder Fixierung der Sensorbaugruppe (100) vorhanden.

Das Trägerelement (10) weist beispielsweise an zumindest einer Außenfläche (11), (12), (13), (14) eine Klebefläche (30) auf.

Die Klebfläche (30) ist beispielsweise zumindest zeitweise mit einer lösbaren Deckfolie (31) abgedeckt.

Ein Sensorsystem (200) für eine Belegerkennung weist beispielsweise zumindest zwei Sensorbaugruppen (100) (a), (100) (b) auf, wobei die Sensorbaugruppen (100) (a), (100) (b) in zumindest einer Position derart zueinander angeordnet sind, dass sie zumindest teilweise einen Überwachungsraumes (R)umfassen und dass ein emittiertes Signal (S) zumindest eines Signalgebers (21) einer ersten Sensorbaugruppe (100) (a) von zumindest einem Signalempfänger (22) einer zweiten Sensorbaugruppe (100) (b) in zumindest einem Belegzustand (BZ) detektierbar ist, so dass ein empfangenes Signal (S) als erster Belegzustand (BZ) und ein gesendetes, aber nicht empfangenes Signal (S) als zweiter Belegzustand (BZ) interpretiert wird.

Die Sensorbaugruppen (100) (a), (100) (b) sind beispielsweise in zumindest einer Position derart zueinander angeordnet, dass sich zumindest jeweils eine ihrer Außenflächen (14)(a), (12)(b) zumindest teilweise gegenüberliegen und dass an den sich zumindest teilweise gegenüberliegenden Außenflächen (14) (a), (12) (b) jeweils zumindest ein Sensorelement (20) (a), (20) (b) angeordnet ist, die zueinander jeweils komplementär sind, insbesondere dass das zumindest erste Sensorelement (20) (a) als Signalgeber (21) (a) und dass das zumindest zweite Sensorelement (20) (b) als Signalempfänger (22) (b) oder dass das zumindest erste Sensorelement (20) (a) als Signalempfänger (22) (a) und dass das zumindest zweite Sensorelement (20) (b) als Signalgeber (21) (b) ausgebildet ist.

Zumindest bei einer der Sensorbaugruppen (100) (b) ist beispielsweise auf zumindest einer der nicht der anderen Sensorbaugruppe (100) (a) zugewandten Außenfläche (11) (b), (13) (b), (14) (b) zumindest ein weiteres Sensorelement (20) (c) angeordnet.

Zumindest bei einer der Sensorbaugruppen (100) (b) ist beispielsweise auf der jeweils von der anderen Sensorbaugruppe (100) (a) abgewandten Außenfläche (14) (b) zumindest ein weiteres Sensorelement (20) (c) angeordnet.

Das zumindest eine weitere Sensorelement (20) (c) ist beispielsweise komplementär ist zu der Art des zumindest einen Sensorelements (20) (b) auf der, der zumindest einen anderen Sensorbaugruppe (100) (a) zugewandten Außenfläche (12) (b), insbesondere dass das Sensorelement (20) (b) als Signalgeber und das Sensorelement (20) (c) als Signalempfänger oder dass das Sensorelement (20) (b) als Signalempfänger und das Sensorelement (20) (c) als Signalgeber ausgebildet.

In Bezug auf die Anordnung der zumindest zwei Sensorbaugruppen (100) (a), (100) (b) weisen beispielsweise die Sensorelemente (20) jeweils einer Art (21), (22) alle dieselbe Orientierung (OR) auf, insbesondere dass alle Signalgeber (21) in eine erste Richtung (OR) (21) und alle Signalempfänger (22) in eine zweite Richtung (OR) (22) orientiert sind.

Die erste Richtung (OR) (21) und zweite Richtung (OR) (22) sind beispielsweise gegensätzlich zueinander orientiert.

An einer Außenfläche (11), (12), (13), (14) einer Sensorbaugruppe (100) oder eines Abschnitts (10) (a), (10) (b) einer Sensorbaugruppe (100) mit Sensorelement (20) sind beispielsweise zumindest zwei, bevorzugt eine Vielzahl von Sensorelementen (20) angeordnet.

Die Sensorelemente (20) zumindest zweier benachbarter Sensorbaugruppen (100) (a), (100) (b) sind beispielsweise jeweils annähernd auf einer gemeinsamen Achse (A) positioniert.

An den einander zugewandten Außenflächen (14) (a), (12) (b) einer Sensorbaugruppe (100) oder eines Abschnitts einer Sensorbaugruppe (10) (a), (10) (b) mit Sensorelementen (20) sind beispielsweise jeweils nur Sensorelemente (20) einer Art angeordnet, insbesondere sind beispielsweise an einer jeweiligen Außenfläche (14) (a), (12) (b) angeordnete Sensorelemente (20) nur als Signalgeber (21) oder nur als Signalempfänger (22) ausgebildet.

Die Sensorelemente (20) sind beispielsweise soweit zueinander beabstandet, dass pro kleinster zu messender Einheit wenigstens ein Paar Sensorelemente (20) vorhanden ist, insbesondere dass pro kleinster zu messender Einheit zumindest je ein Signalgeber (21) und ein Signalempfänger (22) vorhanden ist, bevorzugt dass pro kleinster zu messender Einheit mehrere Signalgeber (21) und mehrere Signalempfänger (22) vorhanden sind.

Eine Steuerelektronik (260) koordiniert beispielsweise jeweils komplementär wirkende und miteinander agierende Sensorelemente (20) der zumindest zwei Sensorbaugruppen (100) (a), (100) (b) oder verschiedener Sensorbaugruppen paar- oder gruppenweise, insbesondere synchronisiert diese miteinander und insbesondere steuert die Abgabe und die Erfassung von Signalen S.

Der Überwachungsraum (R) ist beispielsweise in zumindest zwei Teilbereiche (TB) unterteilt, wobei die Teilbereiche (TB) von der Steuerelektronik (260) jeweils logisch verwaltet werden, insbesondere sind zumindest ein Signalgeber (21) (a) und ein Signalempfänger (22) (a) oder eine Gruppe von komplementär wirkenden und miteinander agierenden Sensorelementen (20) (a), (b) einem ersten Teilbereich (TB) (1) zugeordnet und zumindest ein weiterer Signalgeber (21) (b) und ein weiterer Signalempfänger (22) (b) oder eine Gruppe von weiteren, komplementär wirkenden und miteinander agierenden Sensorelementen (20) (b) einem weiteren Teilbereich (TB) (2) zugeordnet.

Die Steuerelektronik (260) wertet beispielsweise die erfassten Signale aus und die Signale und/oder meldet die ermittelten Belegzustände BZ anhand einer Kommunikationseinrichtung (270) an eine übergeordnete Lagervorrichtung (300) oder an eine übergeordnete Steuereinheit (360) weiter.

Eine Lagervorrichtung (300) zur Lagerung und Verwaltung von Lagergut (G), insbesondere von Stück- und/oder Schüttgut weist mindestens einem Überwachungsraum (R) zur Aufnahme des Lagerguts (G), und ein oben beschriebenes Sensorsystem (200) auf.

Der Belegzustand (BZ) und/oder der Füllungsgrad (FG) des Überwachungsraum (R) von zumindest zwei, annähernd gegenüberliegenden Sensorelementen (20) (a), (20) (b) ist beispielsweise überwacht, wobei in zumindest einem Belegzustand (BZ) ein emittiertes Signal (S) zumindest eines Signalgebers (21) (a) einer ersten Sensorbaugruppe (100) (a) von zumindest einem Signalempfänger(22) (b) einer zweiten Sensorbaugruppe (100) (b) detektierbar ist, so dass ein empfangenes Signal (S) als erster Belegzustand (BZ) und ein gesendetes, aber nicht empfangenes oder ein gedämpft empfangenes Signal (S) als zweiter Belegzustand (BZ) interpretierbar ist, wobei die Kombination mehrerer Belegzustände als Füllgrad (FG) interpretierbar ist.

Der Überwachungsraum (R) von zumindest zwei Begrenzungselemente (310) (a), (310) (b) oder von zumindest zwei Abschnitte (321), (322) eines Begrenzungselements (310) ist beispielsweise zumindest teilweise begrenzt, wobei sich die Begrenzungselemente (310) (a), (310) (b) oder die Abschnitte (321), (322) jeweils mit zumindest einer Außenfläche zumindest teilweise annähernd gegenüberliegen.

An jeweils einem Begrenzungselement (310) (a), (310) (b) oder an jeweils einem Abschnitt (321), (322) ist beispielsweise zumindest eine Sensorbaugruppe (100) angeordnet.

Zumindest eine Sensorbaugruppe (100) (a) ist beispielsweise an einer dem Überwachungsraum (R) zugewandten Außenfläche (311) (a) eines Begrenzungselements (310) (a) angeordnet.

Zumindest eine Sensorbaugruppe (100) (b) ist beispielsweise auf der vom Überwachungsraum (R) abgewandten Außenfläche (311) (b) des jeweiligen Begrenzungselements (310) (b) angeordnet.

Zumindest an einer Seite des Überwachungsraums (R) ist beispielsweise zumindest eine Sensorbaugruppen (100) (b) in das jeweilige Begrenzungselement (310) (b) zumindest teilweise integriert.

Das Begrenzungselement (310) weist beispielsweise zumindest eine Signalöffnung (315) auf, so dass die zumindest eine integrierte oder die zumindest eine, an der dem Überwachungsraum (R) abgewandten Außenfläche angeordnete Sensorbaugruppe (100) (b) ein Signal (S) zu zumindest einer weiteren Sensorbaugruppe (100) (c) durch die Signalöffnung (315) hindurch senden und/oder von zumindest einer weiteren Sensorbaugruppe (100) (a) empfangen kann.

Die Signalöffnung (315) ist beispielsweise zumindest teilweise durch einen Sensorelement (20) ausgefüllt und/oder die Signalöffnung (315) ist beispielsweise zumindest teilweise durch ein für das Signal durchlässiges Material abgedeckt und/oder aufgefüllt.

Zumindest ein Begrenzungselement (310) weist beispielsweise eine Vorrichtung oder Aussparung (316) zur zumindest teilweisen Aufnahme zumindest einer Sensorbaugruppe (100) auf.

Die Vorrichtung oder Aussparung (316) an zumindest einer Außenfläche weist beispielsweise eine Öffnung (317) zum Einbringen eines Begrenzungselements 310 auf.

Zumindest eine Sensorbaugruppe ist beispielsweise an zumindest einem Begrenzungselement in Bezug auf einen Bezugspunkt (B) der Lagervorrichtung (300) und/oder des Begrenzungselements 310 und/oder zumindest einer weiteren Sensorbaugruppe (100) in einer definierten Position fixiert.

Zumindest eine Sensorbaugruppe (100) ist beispielsweise an zumindest einem Begrenzungselement (310) angeklebt.

Zumindest zwei, bevorzugt eine Vielzahl von Sensorbaugruppen (100) sind beispielsweise annähernd parallel zueinander an einem Begrenzungselement (310) angeordnet, wobei die in die einer Ebene angeordneten Sensorelemente eine Sensormatrix bilden.

An jeweils zumindest zwei gegenüberliegenden und somit annähernd parallel zueinander ausgerichtete Begrenzungselementen (310) sind zumindest ein, bevorzugt mehrere Trennelemente (330) angeordnet, wobei die Trennelemente (330) quer zu den Begrenzungselemente (310) verlaufen, so dass zumindest zwei, bevorzugt eine Vielzahl von Überwachungsräumen (Rn) gebildet ist.

An zumindest einem Begrenzungselement (310) ist beispielsweise an zumindest einer Außenfläche (311) zumindest eine Fixiervorrichtung (325) für zumindest ein Trennelement (330) vorhanden.

Eine Vielzahl von Fixiervorrichtungen (325) sind beispielsweise an zumindest einer Seite eines Begrenzungselements (310) angeordnet, so dass eine variable Unterteilung des Überwachungsraums (R) möglich ist.

Jedem Überwachungsraum (Rn) ist beispielsweise zumindest ein Signalgeber (21) und ein Signalempfänger (22) zugeordnet.

Die Lagervorrichtung (300) ist beispielsweise ein Regal (400) ist und zumindest ein erstes Begrenzungselement (310) bildet einen Regalboden (410).

Beispielsweise bilden jeweils weitere Begrenzungselemente (310) weitere Regalebenen (RE) im Regal (400), wobei der Raum zwischen jeweils zwei Regalebenen (RE) (a), (RE) (b) zumindest einen Überwachungsraum (R) bildet.

Beispielsweise ist die zumindest eine Sensorbaugruppe (100) entsprechend der Schwerkraft (F) jeweils unterhalb des jeweiligen Regalbodens (410) einer Regalebene (E) angeordnet.

Beispielsweise sind Sensorelemente (20) verschiedener Regalebenen (RE) entsprechend ihrer jeweiligen Position auf der Sensorbaugruppe (100) jeweils annähernd auf einer gemeinsamen Achse (A) ausgerichtet, wobei die Achse (A) entsprechend zur Schwerkraft (F) vertikal verläuft.

Sensorelemente (20) verschiedener Regalebenen (RE) sind beispielsweise ihrer jeweiligen Art entsprechend jeweils in nur eine Richtung (OR) orientiert, insbesondere sind alle Signalgeber (21) verschiedener Ebenen nur in eine erste Richtung (OR) (21) orientiert und alle Signalempfänger (22) verschiedener Ebenen sind nur in eine zweite Richtung (OR) (22) orientiert.

Beispielsweise sind alle Signalgeber (21) entsprechend der Schwerkraft (F) von oben nach unten orientiert und alle Signalempfänger (22) entgegengesetzt von unten nach oben orientiert.

Der Regalboden jeweils einer Regalebene (RE) weist beispielsweise gegenüber der horizontalen Raumebene (E) in zumindest einer Richtung ein Gefälle auf.

Die Lagervorrichtung (300) ist beispielsweise ein Schrank (500) mit zumindest einer Schublade (501) ist, wobei zumindest jeweils zwei gegenüberliegende Seitenwände (510) der Schublade als Begrenzungselemente (310) (a), (310) (b) einen Überwachungsraum (R) zumindest teilweise umschließen.

Zumindest eine Sensorbaugruppe (100) ist beispielsweise in zumindest ein, eine Seitenwand bildendes, Begrenzungselement integriert.

Beispielsweise sind Sensorelemente (20) verschiedener Begrenzungselemente (310) entsprechend ihrer jeweiligen Position auf der Sensorbaugruppe (100) jeweils annähernd auf einer gemeinsamen Achse (A) ausgerichtet, wobei die Achse (A) quer zur Schwerkraft (F) annähernd horizontal verläuft.

Beispielsweise sind Sensorelemente (20) verschiedener Begrenzungselemente ihrer jeweilige Art entsprechend jeweils in nur eine Richtung (OR) orientiert, insbesondere sind alle Signalgeber (21) verschiedener Begrenzungselemente nur in eine erste Richtung (OR 21) orientiert und alle Signalempfänger (22) verschiedener Begrenzungselemente sind nur ein eine zweite Richtung (OR22) orientiert.

Beispielsweise sind alle Signalgeber (21) entsprechend der Auszugrichtung der Schublade (501) von ihrer Rückwand zu ihrer Stirnwand orientiert und alle Signalempfänger (22) sind entgegengesetzt von ihrer Stirnwand zu ihrer Rückseite orientiert.

Beispielsweise ist zumindest ein weiteres, quer zur Ausziehrichtung der Schublade (501) angeordnetes Begrenzungselemente (310 c) vorhanden.

Beispielsweise ist zumindest ein parallel zur Ausziehrichtung der Schublade (501) angeordnetes Trennelement (330) vorhanden.

Die Schublade 501 weist beispielsweise einen Schubladenstecker 523 auf, der die Schublade 501 zumindest im geschlossenen Zustand elektrisch mit einer Energieversorgung und/oder einer Datenleitung im Korpus des Schranks 500 verbindet.

Beispielsweise fragt eine Steuereinheit (360) zumindest einen Belegzustand BZ zumindest eines Überwachungsraums (R) oder eines Teils eines unterteilten Überwachungsraums (TB) an und wertet das Ergebnis aus und/oder meldet es an ein übergeordnetes Verwaltungssystem (660) weiter.

Die Steuereinheit (360) verwaltet beispielsweise zumindest jeweils zwei zusammenwirkende Sensorelemente (20) zumindest zweier verschiedener Sensorbaugruppen (100) oder zumindest Teilmengen zusammen wirkender Sensormatrizen logisch, und definiert so zumindest einen logischen Teilbereich (TB), der sich in einer Ebene entlang einer Verlaufsrichtung einer ersten Sensorbaugruppe und/oder quer zur Verlaufsrichtung einer ersten Sensorbaugruppe über zumindest eine weitere, parallel angeordnete Sensorbaugruppe erstreckt.

Beispielsweise entspricht zumindest ein Teilbereich genau einer Einheit eines einzulagernden Lagerguts (G).

Beispielsweise entspricht zumindest ein logischer Teilbereich (TB) zumindest einer Anordnung aus Begrenzungselementen (310) und/oder Trennelementen (330), insbesondere der Größe zumindest eines aus Begrenzungselementen (310) und/oder Trennelementen (330) gebildeten Teilbereichs (TB).

Die Steuereinheit (360) erfasst beispielsweise in einer Initialisierung die Teilbereiche (TB) aufgrund der Anordnung der Begrenzungselementen (310) und/oder Trennelementen (330) untereinander und definiert entsprechend zumindest einen Überwachungsraum (R) in seine logischen Teilbereiche (TB) und speichert diesen im Verwaltungssystem (660) ab.

### Bezugszeichenliste

- 100: Sensorbaugruppe
- 10: Trägerelement
- 11: Außenfläche
- 12: Außenfläche
- 13: Außenfläche
- 14: Außenfläche
- 15: Leiterbahn
- 16: Steuerelektronik
- 20: Sensorelement
- 21: Signalgeber
- 22: Signalempfänger
- 23: elektrische/elektronische Bauteile
- 24: Datenbus
- 25: Stromversorgung
- 26: Prüfsignalgeber
- 30: Klebefläche
- 31: Deckfolie
- 32: Schutzschicht/-folie
- 40: Markierung/Fixierung
- 200: Sensorsystem
- 260: Steuerelektronik
- 270: Kommunikationseinrichtung
- 300: Lagervorrichtung
- 310: Begrenzungselement
- 311 a, b, c, d ,e, f: Außenflächen d. Begrenzungselement
- 315: Signalöffnung zur Durchleitung von Signalen
- 316: Aussparung
- 317: Einschuböffnung
- 321: Abschnitt des Begrenzungselements
- 322: Abschnitt des Begrenzungselements
- 325: Fixiervorrichtung f. Trennelement
- 326: Kontakt Fixiervorrichtung
- 327: Strom- u. Datenleitung
- 330: Trennelement
- 331: Kontakt
- 360: Steuereinheit
- 400: Regal
- 410: Regalboden
- 500: Schrank
- 501: Schublade
- 510 a, b, c, d: Seitenwände
- 523: Schubladenstecker
- 524: Datenbus
- 525: Stromversorgung
- 600: Lagersystem
- 620: Datenbus
- 630: Kommunikationseinrichtung
- 640: Netzwerkverbindung
- 650: Server
- 660: Verwaltungssystem
- 670: Handscanner
- 680: optisch lesbarer Code
- 690: Signalisierungsmittel
- 700: Belegplan
- 710: Beleginformation
- 720: Fernwartungsmodul
- 730: Computer
- A: Achse
- B: Bezugspunkt
- BZ: Belegzustand
- E: Ebene
- F: Schwerkraft
- G: Lagergut
- OR: Orientierung
- R: Überwachungsraum
- S: Signal
- TB: Teilbereich

## Patentansprüche

1. Lagersystem (600) mit zumindest einem Regal (400), wobei das Regal (400) mehrere übereinander angeordnete Regalböden (410) aufweist, wobei jeder Regalboden (410) in mehrere nebeneinander angeordnete Kompartimente (TB) logisch unterteilt ist, wobei die Kompartimente jeweils einen Teilbereich (TB) innerhalb eines Überwachungsraums (R) bilden; wobei jedem der Kompartimente (TB) eine eindeutige Adresse zugeordnet ist, und mit einem Sensorsystem (200) zur Belegerkennung der Kompartimente (TB), wobei das Sensorsystem (200) zur räumlichen Abtastung der Belegung eines der Kompartimente (TB) ausgebildet ist, um eine Belegungsinformation (710) zu erzeugen, die einen Belegungsgrad des betreffenden Kompartiments (TB) angibt, und mit einem Datenbus (620), der mit dem Sensorsystem (200) und einer Kommunikationseinrichtung (630) verbunden ist, wobei das Lagersystem (600) zur Durchführung der folgenden Schritte ausgebildet ist:
- Erfassung jeweils einer Belegungsinformation (710) der Kompartimente (TB) durch das Sensorsystem (200),
- Übertragung der Belegungsinformation (710) mit der dem Kompartiment (TB), von dem die Belegungsinformation (710) erfasst wurde, zugeordneten Adresse von dem Sensorsystem (200) über den Datenbus (620) an die Kommunikationseinrichtung (630),
- Aufbau einer Netzwerkverbindung (640) durch die Kommunikationseinrichtung (630), um in uni- oder bidirektionaler Kommunikation Belegungsinformationen (710) an einen Server (650) oder Steuerungsinformationen an das Lagersystem (600) zu übertragen,
- wobei das Sensorsystem (200) mehrere Sensorbaugruppen (100) aufweist;
- **dadurch gekennzeichnet, dass** der Überwachungsraum (R) durch Begrenzungselemente (310) eingefasst oder umfasst ist, die Vorrichtungen (325) zur Aufnahme von weiteren Begrenzungselementen (310) oder von Trennelementen (330) zur Einrichtung der Teilbereiche (TB) aufweisen, wobei die weiteren Begrenzungselemente (310) oder die Trennelemente (330) dazu konfiguriert sind, von oben in die Vorrichtungen (325) eingeschoben zu werden, so dass annähernd rechtwinklige Ecken sowie der jeweilige Teilbereich (TB) entstehen;
- und dass die Vorrichtungen (325) seitlich Kontaktflächen (326) aufweisen, die dazu konfiguriert sind, die dort eingeschobenen Begrenzungselemente (310) und die darin enthaltenen Sensorbaugruppen (100) elektrisch mit dem Sensorsystem (200) zu verbinden.

2. Lagersystem nach Anspruch 1, wobei es sich bei dem Regal (400) um ein Schrägbodenregal handelt, und die Regalböden (410) ein Gefälle in Richtung auf eine Entnahmeseite des Schrägbodenregals aufweisen.

3. Lagersystem nach Anspruch 1 oder 2, wobei jede der Sensorbaugruppen (100) einem der Kompartimente (TB) zugeordnet ist, wobei eine Sensorbaugruppe (100) ihrerseits eine Anzahl von in Längsrichtung der Sensorbaugruppe (100) angeordneten Sensorelemente (20) aufweist.

4. Lagersystem nach Anspruch 2 und 3, wobei jede Sensorbaugruppe (100) genau einem Kompartiment (TB) eindeutig zugeordnet ist und die Längsrichtung der Sensorbaugruppe (100) in Richtung des Gefälles der Kompartimente (TB) verläuft.

5. Lagersystem nach Anspruch 3 oder 4,
wobei eine Sensorbaugruppe (100) eine streifenförmige flexible oder starre Leiterplatte als Träger aufweist; und/oder
mit einer Steuerelektronik (16) für jede der Sensorbaugruppen (100), wobei die Steuerelektronik (16) zur Verbindung der Sensorbaugruppe (100) mit dem Datenbus (620) sowie zur Ausgabe der dem Kompartiment (TB) zugeordneten Adresse und der Belegungsinformation (710) auf den Datenbus (620) ausgebildet ist.

6. Lagersystem nach einem der vorhergehenden Ansprüche,
wobei jedem der Kompartimente (TB) zumindest ein optisches Signalisierungsmittel (690) eindeutig zugeordnet ist, wobei das optische Signalisierungsmittel (690) mit dem Datenbus (620) verbunden ist, um über den Datenbus (620) ein Signal zur optischen Indizierung eines Kompartiments (TB) zu empfangen und die optische Indizierung zu realisieren; und/oder
wobei das Lagersystem (600) zur Speicherung eines Inventurzeitpunkts konfiguriert ist und mit Erreichen des Inventurzeitpunkts eine automatische Inventur durchgeführt wird; und/oder
wobei in der Kommunikationseinrichtung (630) ein Belegplan (700) gespeichert ist, in dem eine Zuordnung von Gütertypen jeweils zu einer oder mehreren Adressen bzw. Kompartimenten (TB) und ein Schwellwert für die Belegungsmenge von Gütern jeweils eines Gütertyps gespeichert ist, und wobei die Kommunikationseinrichtung (630) so konfiguriert ist, dass aus den über den Datenbus (620) empfangenen Beleginformationen und jeweils zugeordneten Adressen die in dem Lagersystem (600) eingelagerte Menge von Gütern eines jeden Gütertyps ermittelt werden kann, die ermittelte Menge von Gütern eines jeden Gütertyps mit dem diesem Gütertyp zugeordneten Mengen-Schwellwert verglichen und ein Signal gesendet werden kann, wenn die ermittelte Gütermenge dieses Gütertyps den ihm zugeordneten Mengen-Schwellwert unterschreitet; und/oder
wobei auf der Kommunikationseinrichtung (630) ein Fernwartungsprogrammmodul (720) installiert ist, welches über das Netzwerk ansprechbar ist und direkt Wartungsvorgänge auf dem Lagersystem (600) durchführen kann, wobei das Fernwartungsprogrammmodul (720) so konfiguriert ist, dass aufgrund des Empfangs eines Kommandos über das Netzwerk das Sensorsystem (200) so angesteuert wird, dass die Belegungsinformation (710) von einem in dem Kommando durch die Angabe einer entsprechenden Adresse spezifizierten Kompartiment (TB) erfasst wird und aufgrund der Belegungsinformation (710) ein Belegungsinformationssignal generiert wird, welches über das Netzwerk gesendet wird; und/oder
wobei die Kommunikationseinrichtung (630) Belegungsinformationen (710) des Lagersystems (600) dynamisch speichern kann, so dass bei einem Systemausfall die Belegungsinformationen (710) jederzeit wiederhergestellt und bei erneuter Systemverfügbarkeit wieder verwendet werden können; und/oder
wobei die Kommunikationseinrichtung (630) zum Anschluss eines Computers (730) über eine lokale Verbindung ausgebildet ist, um einen in der Kommunikationseinrichtung (630) gespeicherten Belegplan (700) auf einer Nutzerschnittstelle des Computers (730) zu visualisieren.

7. Lagersystem nach einem der vorhergehenden Ansprüche, wobei die Kommunikationseinrichtung (630) einen Einrichtungsmodus hat, wobei eine mittels des Sensorsystems (200) im Einrichtungsmodus erfasste Belegung des Lagersystems (600) als Belegplan (700) gespeichert werden kann, wobei der Belegplan (700) insbesondere den einem jeden Kompartiment (TB) zugeordneten Gütertyp und einen diesem Gütertyp zugeordneten Belegungs-Schwellwert beinhaltet, der durch das Sensorsystem (200) erfasste Belegung gegeben ist.

8. Lagersystem nach Anspruch 7,
mit einem Handscanner (670) zur optischen Erfassung eines optisch lesbaren Codes (680), wobei jedes der Kompartimente (TB) einen die jeweiligen Adresse angebenden, optisch lesbaren Code (680) trägt, wobei die Kommunikationseinrichtung (630) so konfiguriert ist, dass die Zuordnung eines Gütertyps zu einem oder mehreren der Kompartimente (TB) dadurch erfolgt, dass die Kommunikationseinrichtung (630) von dem Handscanner eine optisch erfasste Adresse und einen der optisch erfassten Adresse zugeordneten Gütertyp empfängt; und/oder
wobei der Handscanner (670) kabellos ausgebildet ist und eine drahtlose Kommunikationsschnittstelle zur Kommunikation mit der Kommunikationseinrichtung (630) aufweist.

9. Lagersystem nach einem der vorhergehenden Ansprüche, wobei das Sensorsystem (200) pro Kompartiment (TB) eine Sensorbaugruppe (100) als flexible streifenförmige Leiterplatte aufweist.

10. Lagersystem nach Anspruch 9,
wobei die Signalgeber (21) und die Signalempfänger (22) einer Sensorbaugruppe (100) paarweise auf der Leiterplatte, insbesondere auf derselben Leiterplatte, angeordnet sind, so dass ein von einem der Signalgeber abgegebenes Signal von einem Signalempfänger desselben Paars empfangen werden kann; und/oder
wobei die Signalgeber, die Signalempfänger und/oder Leiterbahnen zur Verschaltung der Signalgeber und Signalempfänger mit dem Datenbus (620) auf die Leiterplatte aufgedruckt sind.

11. Verfahren zur Einrichtung eines Lagersystems (600) nach einem der vorhergehenden Ansprüche mit folgenden Schritten:
- Schaltung der Kommunikationseinrichtung (630) in einen Einrichtungsmodus,
- Belegung der Kompartimente (TB) des Lagersystems (600) nach einem vorgegebenen Belegplan (700) mit Mindest-Bestandsmengen, unterhalb deren Nachbestellungen ausgelöst werden sollen,
- Erfassung der Mindest-Bestandsmengen mit dem Sensorsystem (200) und Speicherung in der Kommunikationseinrichtung (630),
- Vervollständigung der Belegung auf den Sollbestand im Lagersystem (600).

12. Verfahren nach Anspruch 11,
wobei die Zuordnung eines Gütertyps zu einem der Kompartimente (TB) mittels eines Handscanners erfolgt; und/oder
wobei der Handscanner eine drahtlose Kommunikationsschnittstelle zu der Kommunikationseinrichtung (630) aufweist, um ein Zuordnungssignal zur Zuordnung des Gütertyps zu einem der Kompartimente (TB) an die Kommunikationseinrichtung (630) zu übertragen.

13. Verfahren zum Betrieb eines Lagersystems (600) nach einem der Ansprüche 1 bis 10, mit folgenden Schritten:
- Erfassung der Belegungsinformation (710) zumindest eines der Kompartimente (TB), wobei die Kompartimente jeweils einen Teilbereich (TB) innerhalb eines Überwachungsraums (R) bilden ,
- Vergleich der erfassten Belegungsinformation (710) mit einem gespeicherten Belegplan durch die Kommunikationseinrichtung (630),
- sofern durch die Kommunikationseinrichtung (630) eine Diskrepanz zwischen der erfassten Belegungsinformation (710) und dem Belegplan detektiert wird, Erzeugung eines Fehlbelegungssignals durch die Kommunikationseinrichtung (630) und Senden des Fehlbelegungssignals über den Datenbus (620) an die Adresse derjenigen Sensorbaugruppe (100), von der die Belegungsinformation (710) erfasst worden ist.

14. Verfahren nach Anspruch 13, wobei optische Signalisierungsmittel (690) über die Sensorbaugruppe (100) mit dem Datenbus (620) verbunden sind und die elektronische Steuerung der Sensorbaugruppe, die das Fehlbelegungssignal über den Datenbus (620) von der Kommunikationseinrichtung (630) empfängt, das optische Signalisierungsmittel (690) der betreffenden Sensorbaugruppe (100) zur Ausgabe des Fehlbelegungssignals ansteuert.

## Claims

1. Storage system (600) having at least one shelf unit (400),
wherein the shelf unit (400) has plural shelves (410) arranged on top of each other,
wherein each shelf (410) is logically subdivided in plural compartments (TB) arranged side by side, wherein the compartments each form a partial section (TB) within a surveillance space (R);
wherein a unique address is assigned to each of the compartments (TB), and having a sensor system (200) for detecting an occupancy of the compartments (TB),
wherein the sensor system (200) is configured for spatially scanning the occupancy of one of the compartments (TB) so as to generate an occupancy information (710), which indicates a degree of occupancy of the respective compartment (TB),
and having a data bus (620), which is connected to the sensor system (200) and a communication device (630),
wherein the storage system (600) is configured to perform the following steps:
- detecting in each case an occupancy information (710) of the compartments (TB) by the sensor system (200),
- transmitting the occupancy information (710) together with the address assigned to the compartment (TB), from which the occupancy information (710) has been detected, from the sensor system (200) via the data bus (620) to the communication device (630),
- establishing a network connection (640) by the communication device (630) so as to transmit occupancy information (710) to a server (650) or control information to the storage system (600) in a unidirectional or bidirectional communication;
wherein the sensor system (200) has plural sensor assemblies (100), **characterized in that**
the surveillance space (R) is bordered or encompassed by delimitation elements (310), that comprise devices (325) for receiving further delimitation elements (310) or of separation elements (330) for establishing the partial sections (TB), wherein the further delimitation elements (310) or separation elements (330) are configured for being inserted, from above, into the devices (325), so that approximately right-angled corners as well as the respective partial section (TB) are formed;
and that
the devices (325) comprise lateral contact surfaces (326), which are configured for electrically connecting the delimitation elements (310) inserted therein, and the sensor assemblies (100) included therein, with the sensor system (200).

2. Storage system according to claim 1, wherein the shelf unit (400) concerns a shelf unit having inclined shelves, and the shelves (410) have a slope in the direction towards a withdrawal side of the shelf unit having inclined shelves.

3. Storage system according to claim 1 or 2, wherein each of the sensor assemblies (100) is assigned to one of the compartments (TB), wherein a sensor assembly (100) for its part has a number of sensor elements (20) arranged in a longitudinal direction of the sensor assembly (100).

4. Storage system according to claim 2 and 3, wherein each sensor assembly (100) is assigned uniquely to precisely one compartment (TB), and the longitudinal direction of the sensor assembly (100) runs in the direction of the slope of the compartments (TB).

5. Storage system according to claim 3 or 4,
wherein a sensor assembly (100) has a strip-shaped, flexible or rigid conductor board as a carrier, and/or
is formed with control electronics (16) for each of the sensor assemblies (100), wherein the control electronics (16) is configured for connecting the sensor assembly (100) to the data bus (620) as well as for outputting the address assigned to the compartment (TB) and the occupancy information (710) onto the data bus (620).

6. Storage system according to any one of the preceding claims,
wherein at least one optical signalling means (690) is uniquely assigned to each of the compartments (TB), wherein the optical signalling means (690) is connected to the data bus (620) so as to receive, via the data bus (620), a signal for optically indexing a compartment (TB), and to realize the optical indexing, and/or
wherein the storage system (600) is configured for storing a stock-taking point in time and an automatic stock-taking is performed upon reaching the stock-taking point in time, and/or
wherein an occupancy plan (700) is stored in the communication device (630), in which occupancy plan an assignment of goods types respectively to one or plural addresses and/or compartments (TB), and a threshold value for the occupancy quantity of goods of respectively one goods type is stored, wherein the communication device (630) is configured such that the quantity of goods of each goods type, which quantity is placed into stock in the storage system (600), can be detected from the occupancy information received via the data bus (620) and the respective assigned addresses, and that the detected quantity of goods of each goods type can be compared with the quantity threshold value assigned to this goods type, and a signal can be sent, if the detected quantity of goods of this goods type falls below the quantity threshold value assigned to this goods type; and/or
wherein on the communication device (630) a remote maintenance program module (720) is installed, which is addressable via the network and can perform maintenance operations directly on the storage system (600), wherein the remote maintenance program module (720) is configured such that on the basis of a reception of a command via the network the sensor system (200) is controlled such that the occupancy information (710) of a compartment (TB), which is specified in the command by the indication of an according address, is detected, and on the basis of the occupancy information (710), an occupancy information signal is generated, which is sent via the network; and/or
wherein the communication device (630) can dynamically store occupancy information (710) of the storage system (600), such that in the case of a system failure, the occupancy information (710) can be restored at any time and can be used again upon a new system availability; and/or
wherein the communication device (630) is configured for connecting a computer (730) via a local connection, so as to visualize an occupancy plan (700), which is stored in the communication device (630), on a user interface of the computer (730).

7. Storage system according to any one of the preceding claims, wherein the communication device (630) has a setup mode, wherein an occupancy of the storage system (600), which occupancy has been detected by the sensor system (200) in the setup mode, can be stored as an occupancy plan (700), wherein the occupancy plan (700) comprises in particular a goods type assigned to each one of the compartments (TB), and an occupancy threshold value, which is assigned to this goods type, and which is given by the occupancy measured by the sensor system (200).

8. Storage system according to claim 7, having a hand-held scanner (670) for optically recognizing an optically readable code (680),
wherein each one of the compartments (TB) carries an optically readable code (680) indicating the respective address, wherein the communication device (630) is configured such that the assignment of a goods type to one or more of the compartments (TB) is effected in that the communication device (630) receives an optically measured address from the hand-held scanner, and a goods type assigned to the optically measured address; and/or
wherein the hand-held scanner (670) is configured wirelessly and comprises a wireless communication interface for communication with the communication device (630).

9. Storage system according to any one of the preceding claims, wherein the sensor system (200) has one sensor assembly (100) per compartment (TB) as a flexible, strip-shaped conductor board.

10. Storage system according to claim 9,
wherein signal transducers (21) and signal receivers (22) of one of the sensor assemblies (100) are arranged in pairs on the conductor board, in particular on the same conductor board, such that a signal, which is output from one of the signal transducers, can be received by a signal receiver of the same pair; and/or
wherein the signal transducers, the signal receivers and/or conductor paths are printed on the conductor board for the interconnection of the signal transducers and the signal receivers to the data bus (620).

11. Method for setting up a storage system (600) according to any one of the preceding claims, the method having the following steps:
- switching the communication device (630) in a setup mode,
- occupying the compartments (TB) of the storage system (600) according to a predefined occupancy plan (700), with minimum stock quantities, underneath which repeat orders shall be triggered,
- detecting the minimum stock quantities by the sensor system (200) and storing them in the communication device (630),
- completing the occupancy to a nominal stock in the storage system (600).

12. Method according to claim 11,
wherein the assignment of a goods type to one of the compartments (TB) is effected by a hand-held scanner; and/or
wherein the hand-held scanner has a wireless communication interface to the communication device (630) so as to transmit to the communication device (630) an assignment signal for assigning the goods type to one of the compartments (TB).

13. Method for operating a storage system (600) according to any one of the claims 1 to 10, the method having the following steps:
- detecting the occupancy information (710) of at least one of the compartments (TB),
- comparing the detected occupancy information (710) to a stored occupancy plan by means of the communication device (630),
- if a discrepancy between the detected occupancy information (710) and the occupancy plan is detected by the communication device (630), generating, by the communication device (630), a false occupancy signal, and sending the false occupancy signal via the data bus (620) to the address of the very sensor assembly (100), from which the occupancy information (710) has been detected.

14. Method according to claim 13, wherein the optical signalling means (690) are connected to the data bus (620) via the sensor assembly (100), and the electronic control of the sensor assembly, which receives the false occupancy signal from the communication device (630) via the data bus (620), controls the optical signalling means (690) of the respective sensor assembly (100) for outputting the false occupancy signal.

## Revendications

1. Système de stockage (600) avec au moins un rayonnage (400), dans lequel le rayonnage (400) présente plusieurs étagères (410) disposées les unes au-dessus des autres, dans lequel chaque étagère (410) est divisée logiquement en plusieurs compartiments (TB) disposés côte à côte, dans lequel les compartiments forment respectivement une zone partielle (TB) à l'intérieur d'un espace de surveillance (R), dans lequel une adresse claire est associée à chacun des compartiments (TB), et avec un système de capteur (200) pour identifier l'occupation des compartiments (TB), dans lequel le système de capteur (200) est réalisé pour sonder spatialement l'occupation d'un des compartiments (TB) pour générer une information d'occupation (710), qui indique un degré d'occupation du compartiment (TB) concerné, et avec un bus de données (620), qui est relié au système de capteur (200) et à un équipement de communication (630), dans lequel le système de stockage (600) est réalisé pour mettre en œuvre les étapes suivantes :
- la détection respectivement d'une information d'occupation (710) des compartiments (TB) par le système de capteur (200),
- la transmission de l'information d'occupation (710) avec l'adresse associée au compartiment (TB), duquel l'information d'occupation (710) a été détectée, par le système de capteur (200) à l'équipement de communication (630) par l'intermédiaire du bus de données (620),
- l'établissement d'une liaison de réseau (640) par l'équipement de communication (630) pour transmettre dans une communication unidirectionnelle ou bidirectionnelle des informations d'occupation (710) à un serveur (650) ou des informations de commande au système de stockage (600),
- dans lequel le système de capteur (200) présente plusieurs modules de capteur (100),
- **caractérisé en ce que**
l'espace de surveillance (R) est encadré ou compris par des éléments de délimitation (310), qui présentent des dispositifs (325) pour loger d'autres éléments de délimitation (310) ou des éléments de séparation (330) pour mettre en place les zones partielles (TB), dans lequel les autres éléments de délimitation (310) ou les éléments de séparation (330) sont configurés pour être enfilés depuis le haut dans les dispositifs (325) de telle sorte que se forment des angles approximativement rectangulaires ainsi que la zone partielle (TB) respective ;
- et que
les dispositifs (325) présentent latéralement des surfaces de contact (326), qui sont configurées pour relier de manière électrique au système de capteur (200) les éléments de délimitation (310) enfilés à cet endroit et les modules de capteur (100) contenus dans ceux-ci.

2. Système de stockage selon la revendication 1, dans lequel le rayonnage (400) est un rayonnage à étagères obliques, et les étagères (410) présentent une pente en direction d'un côté de prélèvement du rayonnage à étagères obliques.

3. Système de stockage selon la revendication 1 ou 2, dans lequel chacun des modules de capteur (100) est associé à un des compartiments (TB), dans lequel un module de capteur (100) présente quant à lui un nombre d'éléments de capteur (20) disposés dans le sens longitudinal du module de capteur (100).

4. Système de stockage selon la revendication 2 et 3, dans lequel chaque module de capteur (100) est associé de manière claire précisément à un compartiment (TB) et le sens longitudinal du module de capteur (100) s'étend en direction de la pente des compartiments (TB).

5. Système de stockage selon la revendication 3 ou 4,
dans lequel un module de capteur (100) présente en tant que support une carte de circuits imprimés flexible ou rigide en forme de bande ; et/ou
avec une électronique de commande (16) pour chacun des modules de capteur (100), dans lequel l'électronique de commande (16) est réalisée pour relier le module de capteur (100) au bus de données (620) ainsi que pour émettre l'adresse associée au compartiment (TB) et l'information d'occupation (710) sur le bus de données (620) .

6. Système de stockage selon l'une quelconque des revendications précédentes,
dans lequel au moins un moyen de signalisation (690) optique est clairement associé à chacun des compartiments (TB), dans lequel le moyen de signalisation (690) optique est relié au bus de données (620) pour recevoir par l'intermédiaire du bus de données (620) un signal pour indexer de manière optique un compartiment (TB) et pour réaliser l'indexation optique ;
et/ou
dans lequel le système de stockage (600) est configuré pour mémoriser un moment d'inventaire et une fois le moment d'inventaire atteint, un inventaire automatique est mis en œuvre ;
et/ou
dans lequel est mémorisé dans l'équipement de communication (630) un plan d'occupation (700), dans lequel sont mémorisées une association de types de produits respectivement à une ou plusieurs adresses ou à un ou plusieurs compartiments (TB) et une valeur de seuil pour la quantité d'occupation de produits respectivement d'un type de produits, et dans lequel l'équipement de communication (630) est configuré de telle sorte que la quantité de produits d'un type de produits respectif entreposée dans le système de stockage (600) peut être déterminée à partir des informations d'occupation reçues par l'intermédiaire du bus de données (620) et d'adresses respectivement associées, la quantité déterminée de produits d'un type de produits respectif peut être comparée à la valeur de seuil de quantité associée audit type de produits et un signal peut être envoyé quand la quantité de produits déterminée dudit type de produits reste inférieure à la valeur de seuil de quantités qui lui est associée ; et/ou
dans lequel est installé sur l'équipement de communication (630) un module de programme de maintenance à distance (720), lequel peut répondre par l'intermédiaire du réseau et peut mettre en œuvre directement des opérations de maintenance sur le système de stockage (600), dans lequel le module de programme de maintenance à distance (720) est configuré de telle sorte qu'en raison de la réception d'une commande par l'intermédiaire du réseau, le système de capteur (200) est piloté de telle sorte que l'information d'occupation (710) d'un compartiment (TB) spécifié dans la commande par l'indication d'une adresse correspondante est détectée et en raison de l'information d'occupation (710), un signal d'information d'occupation est généré, lequel est envoyé par l'intermédiaire du réseau ;
et/ou
dans lequel l'équipement de communication (630) peut mémoriser de manière dynamique des informations d'occupation (710) du système de stockage (600) de telle sorte que dans le cas d'une panne de système, les informations d'occupation (710) peuvent être restaurées à tout moment et peuvent être réutilisées lors de la remise à disposition du système ; et/ou
dans lequel l'équipement de communication (630) est réalisé pour raccorder un ordinateur (730) par l'intermédiaire d'une liaison locale pour visualiser un plan d'occupation (700) mémorisé dans l'équipement de communication (630) sur une interface utilisateur de l'ordinateur (730).

7. Système de stockage selon l'une quelconque des revendications précédentes, dans lequel l'équipement de communication (630) a un mode d'installation, dans lequel une occupation, détectée au moyen du système de capteur (200) dans le mode d'installation, du système de stockage (600) peut être mémorisée en tant que plan d'occupation (700), dans lequel le plan d'occupation (700) renferme en particulier le type de produits associé à chaque compartiment (TB) et une valeur de seuil d'occupation associée audit type de produits, qui est donnée par l'occupation détectée par le système de capteur (200).

8. Système de stockage selon la revendication 7,
avec un scanner manuel (670) pour détecter de manière optique un code (680) optiquement lisible, dans lequel chacun des compartiments (TB) porte un code (680) optiquement lisible indiquant l'adresse respective, dans lequel l'équipement de communication (630) est configuré de telle sorte que l'association d'un type de produits à un ou plusieurs des compartiments (TB) est effectuée en ce que l'équipement de communication (630) reçoit du scanner manuel une adresse détectée de manière optique et un type de produits associé à l'adresse détectée de manière optique ; et/ou
dans lequel le scanner manuel (670) est réalisé sans câble et présente une interface de communication sans fil pour communiquer avec l'équipement de communication (630).

9. Système de stockage selon l'une quelconque des revendications précédentes, dans lequel le système de capteur (200) présente par compartiment (TB) un module de capteur (100) en tant que carte de circuits imprimés flexible en forme de bande.

10. Système de stockage selon la revendication 9,
dans lequel l'émetteur de signaux (21) et le récepteur de signaux (22) d'un module de capteur (100) sont disposés par paire sur la carte de circuits imprimés, en particulier sur la même carte de circuits imprimés de telle sorte qu'un signal émis par un des émetteurs de signaux peut être reçu par un récepteur de signaux de la même paire ; et/ou
dans lequel les émetteurs de signaux, les récepteurs de signaux et/ou les pistes conductrices sont imprimés sur la carte de circuits imprimés pour brancher les émetteurs de signaux et les récepteurs de signaux au bus de données (620) .

11. Procédé pour installer un système de stockage (600) selon l'une quelconque des revendications précédentes, avec des étapes suivantes :
- la commutation de l'équipement de communication (630) dans un mode d'installation,
- l'occupation des compartiments (TB) du système de stockage (600) selon un plan d'occupation (700) prédéfini avec une quantité de stock minimale, en dessous de laquelle des commandes ultérieures doivent être déclenchées,
- la détection des quantités de stock minimales avec le système de capteur (200) et la mémorisation dans l'équipement de communication (630),
- l'intégration de l'occupation sur le stock théorique dans le système de stockage (600).

12. Procédé selon la revendication 11,
dans lequel l'association d'un type de produits à un des compartiments (TB) est effectuée au moyen d'un scanner manuel ; et/ou
dans lequel le scanner manuel présente une interface de communication sans fil avec l'équipement de communication (630) pour transmettre à l'équipement de communication (630) un signal d'association pour associer le type de produits à un des compartiments (TB).

13. Procédé pour faire fonctionner un système de stockage (600) selon l'une quelconque des revendications 1 à 10, avec des étapes suivantes :
- la détection de l'information d'occupation (710) d'au moins un des compartiments (TB), dans lequel les compartiments forment respectivement une zone partielle (TB) à l'intérieur d'un espace de surveillance (R),
- la comparaison de l'information d'occupation (710) détectée à un plan d'occupation mémorisé par l'équipement de communication (630),
- dans la mesure où un écart entre l'information d'occupation (710) détectée et le plan d'occupation est détecté par l'équipement de communication (630), la génération d'un signal d'occupation erronée par l'équipement de communication (630) et l'envoi du signal d'occupation erroné par l'intermédiaire du bus de données (620) à l'adresse du module de capteur (100), par lequel précisément l'information d'occupation (710) a été détectée.

14. Procédé selon la revendication 13, dans lequel des moyens de signalisation (690) optiques sont reliés au bus de données (620) par l'intermédiaire du module de capteur (100) et la commande électronique du module de capteur, qui reçoit de l'équipement de communication (630) par l'intermédiaire du bus de données (620) le signal d'occupation erronée, pilote le moyen de signalisation (690) optique du module de capteur (100) concerné pour émettre le signal d'occupation erronée.
